# EUROPÄISCHE PATENTSCHRIFT

(11) **EP 0 838 398 B1**
(45) Veröffentlichungstag und Bekanntmachung des Hinweises auf die Patenterteilung: **26.01.2000**
(21) Anmeldenummer: 97117204.4
(22) Anmeldetag: 04.10.1997
(51) Int. Cl.: B65B 11/02, B65B 61/02, B29C 63/00

(54) **Verfahren und Vorrichtung zum Applizieren von selbsthaftender Schutzfolie auf Karosserien**
Method and apparatus for applying self-adhesive protective film to car bodies
Procédé et dispositif pour l'application de film protecteur auto-adhésif aux carrosseries de véhicules

(30) Priorität: 17.10.1996 DE 19642831; 30.04.1997 DE 19718204
(43) Veröffentlichungstag der Anmeldung: 29.04.1998
(73) Patentinhaber: DaimlerChrysler AG, 70567 Stuttgart (DE)
(72) Erfinder: Habisreitinger, Uwe, Dipl.-Ing., 72250 Freudenstadt (DE); Nordmann, Bernhard, 71034 Böblingen (DE); Walter, Wolfram, Dipl.-Ing., 73765 Neuhausen (DE); Link, Thomas, 72202 Nagold (DE); Starzmann, Fritz, 75378 Bad Liebenzell (DE)

(56) Entgegenhaltungen:
- PATENT ABSTRACTS OF JAPAN vol. 018, no. 655 (M-1721), 12.Dezember 1994 & JP 06 255873 A (NITTO DENKO CORP;OTHERS: 01), 13.September 1994,
- PATENT ABSTRACTS OF JAPAN vol. 018, no. 483 (M-1670), 8.September 1994 & JP 06 156339 A (HONDA MOTOR CO LTD), 3.Juni 1994,
- PATENT ABSTRACTS OF JAPAN vol. 018, no. 651 (C-1285), 9.Dezember 1994 & JP 06 254451 A (HONDA MOTOR CO LTD), 13.September 1994,
- PATENT ABSTRACTS OF JAPAN vol. 096, no. 001, 31.Januar 1996 & JP 07 237569 A (HONDA MOTOR CO LTD), 12.September 1995,

## Beschreibung

Die Erfindung betrifft ein Verfahren zum Applizieren von selbsthaftender Schutzfolie auf Karosserien für den Versand von Fahrzeugen nach dem Oberbegriff des Anspruchs 1 und eine entsprechende Vorrichtung nach dem Oberbegriff des Anspruchs 20, wie sie beispielsweise aus der JP 06/255 873 A als bekannt hervorgehen.

In der Serienfertigung vieler Fahrzeug-Hersteller müssen die Fahrzeuge für den Versand derart präpariert werden, daß sie keinen Schaden nehmen, insbesondere daß die Lackierung durch Lagerung und Witterungseinflüsse nicht beeinträchtigt wird. Werden für die Kundenüberführung Bahnfahrten oder gar Schiffstransporte nötig, so hat man die Fahrzeuge hierfür mit einer Wachsschutzschicht überzogen, die vor Kundenauslieferung wieder entfernt werden mußte. Das rückstandsfreie Entfernen des Schutzwachses war nicht nur eine personalintensive Arbeit, sondern belastete auch Mensch und Umwelt wegen der dabei eingesetzten Lösungsmittel.

Deshalb ist man neuerdings dazu übergegangen, die Karosserien während des Transportes durch selbsthaftende Folien zu schützen, wobei man jedoch lediglich die witterungs- und ablagerungsgefährdeten, im wesentlichen horizontalliegenden Oberflächenpartien der Karosserie so geschützt hat. Weil diese Schutzart nicht nur sehr wirkungsvoll, sondern auch relativ teuer ist, hat man sie nicht nur als Schutz während des Transportes, sonder auch als Schutz während der Fahrzeugmontage vorgesehen und demgemäß die Schutzfolie bereits vor der Endmontage des Fahrzeuges, d.h. unmittelbar nach der Lackierung der Karosserie aufgebracht. Ein solcher Schutz ist nicht nur für übliche Pkw-Limousinen in Stufenheckbauart, sondern für alle möglichen Fahrzeuge vorteilhaft, wie z.B. Kombolimousinen, Kleinbusse, sog. Großraumlimousinen oder Geländewagen.

Die Schutzfolie soll möglichst falten- und blasenfrei aufgebracht werden, weil sich unter Falten oder Blasen nach einer gewissen Lagerungszeit ein Mikroklima bilden kann, welches je nach Lacktyp und -farbe u.U. zu sichtbaren Spuren führen kann. Um die Schutzfolien sorgfältig aufbringen zu können, mußten bei einer manuellen Applikation die Folienzuschnitte bisher von vier Personen gehalten, über das Fahrzeug gebracht, ausgerichtet und an die zugehörigen Oberflächenpartien angelegt werden. Trotz des hohen Personalaufwandes ließen sich nicht immer Falten oder Blasen beim Applizieren der Schutzfolie vermeiden. Beim anschließenden Freischneiden der Bereiche für Zubauteile kam es häufig zu Beschädigungen der Lackierung, so daß aufwendige Nacharbeiten erforderlich wurden.

Beim bisherigen-manuellen Applizieren der Schutzfolie ist man folgendermaßen vorgegangen: Zunächst wurde von mindestens zwei Personen ein größenmäßig auf eine Oberflächenpartie abgestimmtes, rechteckiges Stück einer Schutzfolie von einer Vorratsrolle abgezogen und abgeschnitten, wobei es von insgesamt vier Personen übernommen werden mußte. Dieses Schutzfolienstück wurde von den vier Personen freihändig mit der selbsthaftenden Seite nach unten weisend frei ausgespannt, so über die Karosserie verbracht, dort in Horizontallage auf die zugehörige Oberflächenpartie lagegerecht abgesenkt, daran mehr oder weniger falten- und blasenfrei angelegt und durch Streichen mit einem weichen, gleitfähigen Gegenstand, z.B. einem ausgesteiften Filzstück angedrückt. Im Bereich überklebter Spalte zu angrenzenden Karosserieteilen wie Kotflügel oder Türen wurde die Schutzfolie mit einem Messer manuell durchschnitten und die Schnittränder von Hand angedrückt.

Die eingangs erwähnte JP 06/255 873 A zeigt ein mechanisiertes Verfahren bzw. eine Vorrichtung zum mechanisierten Applizieren von selbsthaftender Schutzfolie auf Oberflächenpartien von Fahrzeug-Karosserien. Dort wird ein abgemessenes Stück einer Schutzfolie von einer bereitgestellten Vorratsrolle mechanisiert abgezogen, unter einer Eigenspannung ausgespannt, abgeschnitten, lagegerecht auf die zugehörige Oberflächenpartie der Karosserie abgesenkt und auf sie angedrückt. Dabei ist die Vorratsrolle, der Abzieh- und Ausspann-Mechanismus und die Abschneidevorrichtung an einem auf und ab beweglichen Ausleger einer Applikationseinrichtung angebracht, die bei jeder Applikationsbewegung gemeinsam mit dem aufzuklebenden Folienstück mit bewegt werden.

Um die Schutzfolie im Bereich von Zubauteilen wie Dachzierstäben, Schiebedachdeckel, Kühleraufsatzfigur, Scheibenwaschdüsen, Antennen, Scheibeneinfassungen o.dgl. freischneiden und montagegerecht aussparen zu können, hat man bei der manuellen Folienapplikation zuvor eine flache streifenförmige Schablone auf die Karosserie lagegerecht aufgelegt und diese mit der zu applizierenden Schutzfolie ebenfalls überklebt, so daß an den freizuschneidenden Bereichen die Folie nicht nur in einem kleinen Abstand zur Karosserieoberfläche gehalten wurde, sondern durch die Schablone auch eine Schneid- und Führungskante für ein Messer gebildet wurde, entlang der die Folie konturgerecht getrennt werden konnte. Das Arbeiten mit einem scharfkantigen Messer in dichtem Abstand zur lackierten Karosserieoberfläche hat in der Hektik trotz laufender Übung immer wieder zu Lackbeschädigungen und zu Aufwendiger Nacharbeit geführt.

Der Stand der Technik einer manuellen Folienapplikation entsprach der Fertigungspraxis zumindest bei der Anmelderin. Nachdem die USA aus Umweltschutzgründen keine Schutzwachsungen im Fahrzeugversand mehr zulassen, sind - wie die eingangs zitierte Druckschrift vermuten läßt - auch andere Fahrzeughersteller zu einem ähnlichen Folienschutzsystem für deren Fahrzeuge während des Versandes übergegangen.

Ausgehend von dem gewürdigten Stand der Technik ist es Aufgabe der Erfindung, das Applikationsverfahren bzw. die entsprechende Vorrichtung dahingehend zu verbessern, daß eine eintönige Handarbeit nicht mehr erforderlich ist, die Qualität der Applikation in Bezug auf Blasen- und Faltenfreiheit der aufgebrachten Schutzfolie verbessert, Lackbeschädigungen vermieden und außerdem Personalkosten eingespart werden können.

Diese Aufgabe wird bezüglich des Applikationsverfahrens erfindungsgemäß durch die kennzeichnenden Merkmale von Anspruch 1 und bezüglich der Vorrichtung durch die von Anspruch 20 gelöst.

Danach wird zur Mechanisierung der Folienapplikation auf die Karosserie ein bestimmtes, rechteckiges Stück einer Schutzfolie von einer Vorratsrolle unter Einsatz eines robotergeführten Spannrahmens, vorzugsweise mit Saugschenkeln, an der nichthaftenden Seite erfaßt, von einer ortsfesten Vorratsrolle abgezogen und abgeschnitten. Vor dem Anlegen des Folienzuschnittes an die Karosserie werden im frei ausgespannten Zustand Abreißlinien im Bereich von Zubauteilen mit einem Perforationswerkzeug angebracht. Beispielsweise wird die Schutzfolie mit einer beheizten mechanisch entlang definierter Konturlinien geführten Zackenscheibe von deren nichtklebender Folienseite her perforiert. Erst dann wird die so präparierte, faltenfrei im Spannrahmen ausgespannte Schutzfolie von dem Handhabungsroboter auf die zugehörige Oberflächenpartie lagegerecht abgesenkt, blasenfrei angelegt und mit einer Streichleiste angedrückt. Auf diese Weise werden sukzessive alle oberflächepartien überklebt. Im Bereich von Zubauteilen werden Schutzfolienteile entlang der perforierten Reißlinien abgezogen und die Bereiche so montagegerecht ausgespart.

In zweckmäßiger Ausgestaltung der Erfindung werden die zunächst lose applizierten Folien alle gemeinsam angedrückt. Im Bereich überklebter Fugen wird die Schutzfolie durchtrennt und die Schnittränder im Spaltbereich werden zweckmäßigerweise mit einer rotierenden Bürste angedrückt.

Weitere zweckmäßige Ausgestaltungen der Erfindung können den Unteransprüchen entnommen werden; im übrigen ist die Erfindung anhand eines in den Zeichnungen dargestellten Ausführungsbeispieles nachfolgend noch erläutert; dabei zeigen:
- Fig. 1: das Lay-out einer Fertigungslinie zum automatisierten, serienmäßigen Bekleben von Personenkraftwagen in Draufsicht,
- Fig. 2: einen vergrößerten Ausschnitt der wesentlichen Arbeitsstationen der Fertigungslinie nach Figur 1 ebenfalls in Draufsicht,

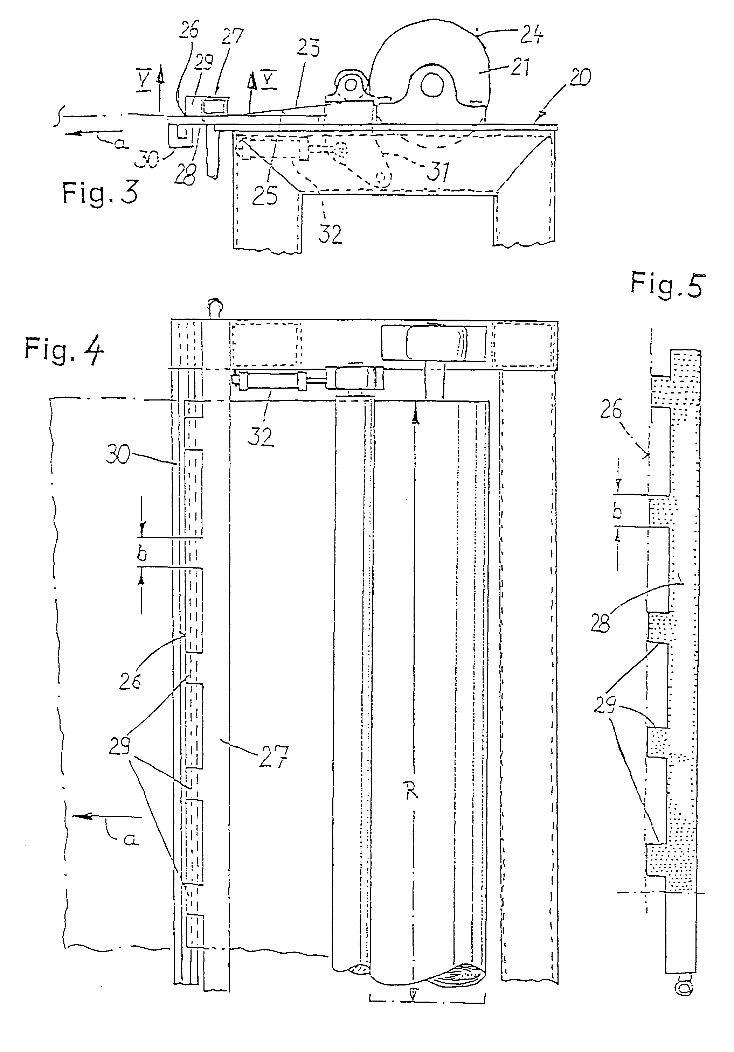

- Fig. 3 und 4: Seitenansicht (Figur 3) und Draufsicht (Figur 4) auf einen Einrichtung zum bedarfsgerechten Bereithalten und Abziehen von Schutzfolie von einer Vorratsrolle,
- Fig. 5: eine Einzeldarstellung einer Saugleiste aus der Einrichtung nach Figur 3 bzw. 4 zum Festhalten des vorauslaufenden Folienendes, mit Blickrichtung auf die normal untenliegende, saugwirksame Seite der Saugleiste,

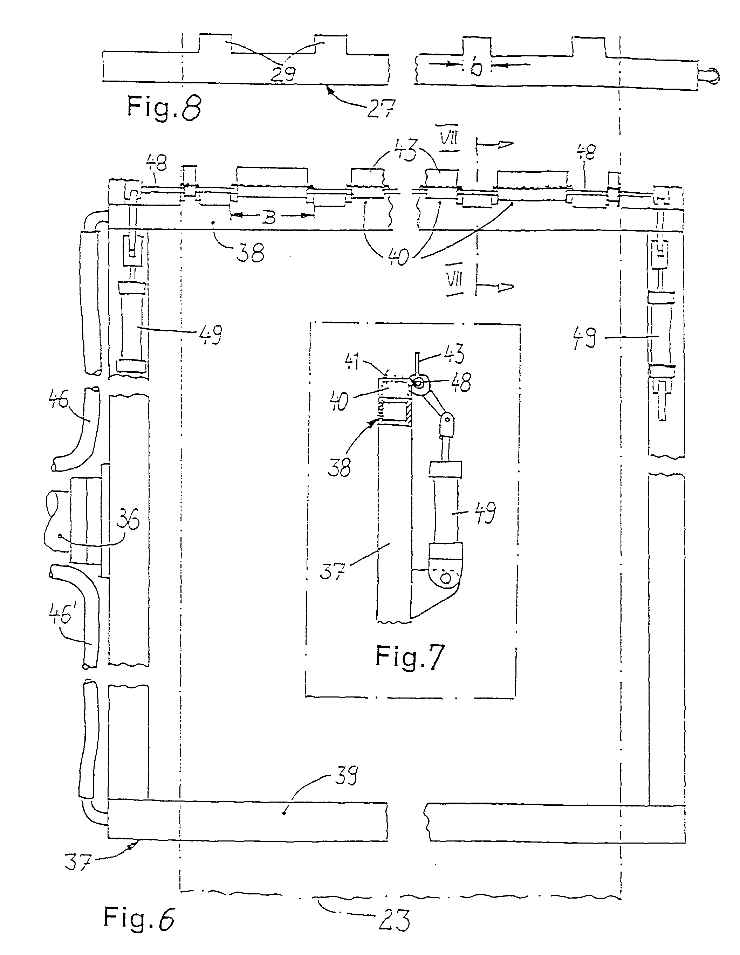

- Fig. 6: einen robotergeführten Spannrahmen zum automatisierten Handhaben eines vom Vorrat abgeschnittenen Folienzuschnittes,
- Fig. 7: einen Querschnitt durch die vorauslaufende Saugleiste des Spannrahmens nach Figur 6 entlang der Schnittlinie VII-VII, zusätzliche Greifelemente zeigend,

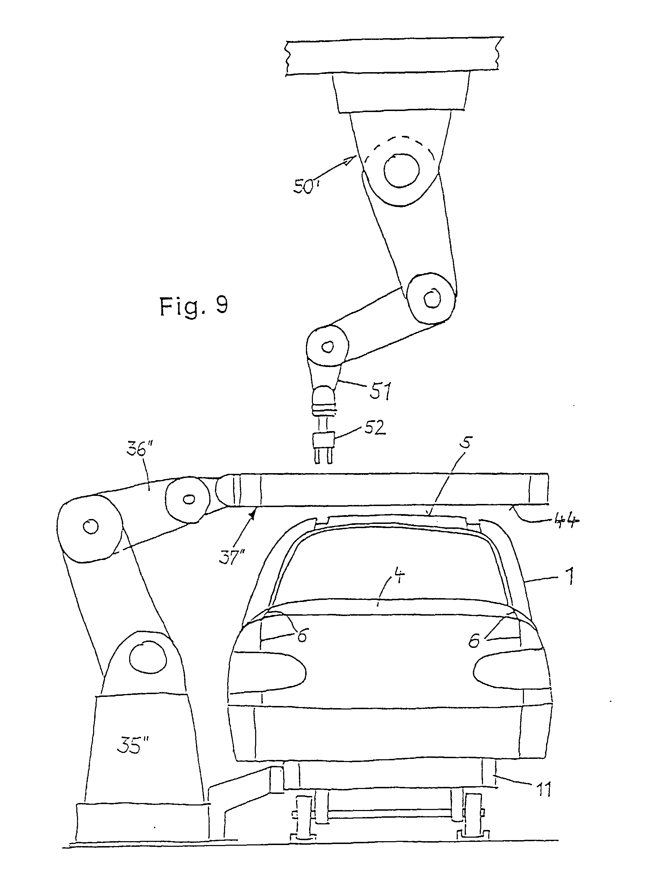

- Fig. 8: die Saugleiste der Abrolleinrichtung zum Festhalten des vorauslaufenden Folienendes in lagerichtiger Gegenüberstellung zur vorauslaufenden Saugleiste des Spannrahmens nach Figur 6,
- Fig. 9: eine Längsansicht der Station für das Bekleben des Daches in dem Stadium, wo der im Spannrahmen ausgespannt bereitgehaltene Folienzuschnitt vom hängenden Perforationsroboter bearbeitet wird,
- Fig. 10: einen in einem Spannrahmen ausgespannten Folienzuschnitt mit verschiedenen, darin eingezogenen Perforationslinien,
- Fig. 11 und 12: zwei verschiedene Seitenansichten auf ein Tandem-Perforationswerkzeug, mit dem simultan zwei äquidistante Perforationslinien in die ausgespannt bereitgehaltene Schutzfolie gelegt werden können
- Fig. 13: ein Doppelwerkzeug zum Perforieren von Doppel- oder von Mono-Perforationslinien,

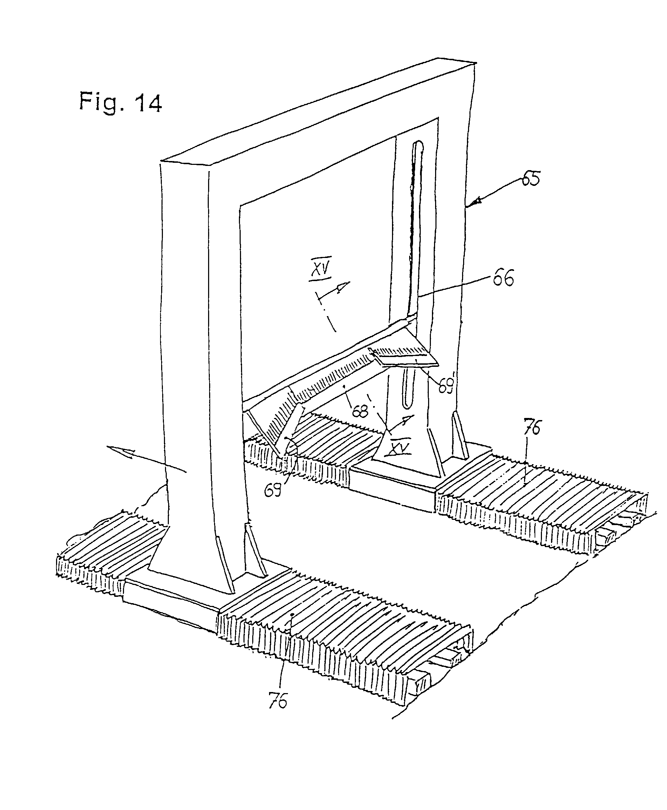

- Fig. 14: eine Schrägansicht auf ein verschiebbares, Karosserieübergreifendes Portal mit einer vertikalbeweglichen Streichleiste zum Andrücken der applizierten Schutzfolie,
- Fig. 15: einen Querschnitt durch die Streichleiste des Portals nach Figur 14 entlang der Schnittlinie XV-XV und
- Fig. 16: eine Seitenansicht eines robotergeführten Doppelwerkzeugs zum Lage-Vermessen und zum Fugen-Freischneiden sowie Ränderandrücken der Schutzfolie.

Bevor auf die Einrichtung zum automatisierten Bekleben der Karosserie im einzelnen eingegangen wird, sei zunächst das erfindungsgemäße Verfahren zum Folienapplizieren unter Bezugnahme auf die Zeichnungen näher geschildert.

Die selbsthaftende, in Vorratsrollen 21 bereitgestellte Schutzfolie 23 wird automatisiert auf bestimmte, vorzugsweise die horizontalen Oberflächenpartien von Pkw-Karosserien 1 in üblicher Stufenheck-Version appliziert. Zwar ist es grundsätzlich möglich, die Schutzfolie auf das fertig montierte Fahrzeug oder auch zu jedem beliebigen anderen Zeitpunkt während der Endmontage des Fahrzeuges auf die Karosserie zu applizieren. Da die applizierte Schutzfolie jedoch schon während der Montage einen gewissen Schutz der Lackierung vor montagebedingten Beschädigungen bietet, wird gemäß dem dargestellten Ausführungsbeispiel die Schutzfolie auf die frisch lackierten Karosserien 1 appliziert, die anschließend mit der Schutzfolie in die Endmontage einlaufen. Auch eine Beklebung der Seitenflächen von Türen, vorzugsweise der bei der Montage besonders häufig benutzten vorderen Türen und insbesondere der Fahrertür ist vorteilhaft. Ob die Schutzfolie nun vor, während oder nach der Montage appliziert wird, in jedem Fall muß die Folie montagegerecht an Stellen von Zubauteilen ausgespart sein.

Zur automatisierten Folienapplikation wird von dem Folienvorrat durch einen Robotergeführten Spannrahmen 37 ein abgemessenes Folienstück 44 abgezogen und faltenfrei und unter einer gewissen Eigenspannung in den Spannrahmen übernommen. In diesen ausgespannten und dank des Spannrahmens fast wie ein starres Werkstück handhabbaren Folienzuschnitt werden vor der Folienapplikation mit einem ebenfalls robotergeführten Perforationswerkzeug lagegerecht Perforationslinien in den Folienzuschnitt gelegt, die ein montagebedingtes Entfernen bestimmter Folienbereiche durch Abreißen entlang der Perforationslinien ermöglichen. Erst danach wird der mit den Perforationslinien versehene Folienzuschnitt durch den Spannrahmenroboter lagegerecht auf die zugehörige Oberflächenpartie der Karosserie abgesenkt und falten- und blasenfrei auf sie angedrückt.

Im einzelnen sind dabei folgende Verfahrensschritte vorgesehen: Das vorauslaufende, von der Vorratsrolle 21 ausgehende Ende der Schutzfolie 23 wird derart lagedefiniert und faltenfrei festgehalten und bereitgestellt, daß das Folienende 26 auf der nichthaftenden Seite 24 zumindest bereichsweise zugänglich ist. Während des Abziehens wird die Schutzfolie 23 in einem frei ausgespannten Trum laufend antistatisch behandelt, so daß sich die Folienzuschnitte später störungsfrei auch bis in den Randbereich an die Karosserieoberfläche anlegen lassen. Das erwähnte vorratsseitige Endes der Schutzfolie wird auf ihrer nichtklebenden Seite durch die spannrahmenseitige, vom Spannrahmenroboter in Abziehrichtung a geführte erste Saugleiste 38 und nach Lösen der Folie von der Bereitstellungs-Halterung übernommen.

Nun wird ein größenmäßig auf eine Oberflächenpartie abgestimmtes, rechteckiges Stück einer Schutzfolie von der Vorratsrolle 21 abgezogen und ausgespannt, solange das Folienabzugstück noch am Vorrat anhaftet. Eine nachlaufende, zweite Saugleiste 39 des Spannrahmens 37 setzt auf die nichtklebende Seite der ausgespannten Schutzfolie auf und hält auch dort durch zugeschaltetes Vakuum die Folie fest. Dadurch wird das abgezogene Folienabzugstück in dem Spannrahmen eingespannt und zugleich ein neues vorratsseitiges Folienende an der Bereitstellungs-Halterung wieder festgehalten. Durch geeignete konstruktive Maßnahmen beim Abwickeln der Schutzfolie wird trotz unterschiedlicher Haftung der Folienlagen des Wickels aufeinander und trotz unterschiedlicher Wickeldurchmesser sichergestellt, daß die Schutzfolie mit gleichbleibender Spannung von der Vorratsrolle abgezogen und in den Spannrahmen übernommen wird. Ein quer laufendes Messer schneidet das abgezogene, im Spannrahmen bereits festgehalten Folienstück vom Vorrat ab.

Der Spannrahmenroboter 35 hält den nun frei beweglichen Folienzuschnitt 44 arbeitsgerecht und lagedefiniert dem Perforations-roboter 50 hin, der in die frei ausgespannte Folie von der nichtklebenden Folienseite her die erforderlichen Abreißlinien 45, 45', 45" mittels eines geeigneten Perforationswerkzeuges perforiert. In Diesem Zusammenhang sind verschiedene Perforationsverfahren und demgemäß unterschiedliche Werkzeuge dazu denkbar. Zunächst ist hier ein rein mechanisches, schneidend wirkendes Perforieren einsetzbar, wozu ein drehbares Messerrad - nach Art des weiter unten beschriebenen Zackenrades - mit mehreren radial abragenden, spitzen und scharfen Messerklingen als wesentlicher Teil eines Perforationswerkzeuges erforderlich wäre. Daneben ist auch ein rein thermisch wirksames, berührungsfreises Perforieren mittels eines fokussierten Laserstrahles möglich, welches einen entsprechenden Laserkopf als Perforationswerkzeug voraussetzen würde. Beim dargestellten Ausführungsbespiel ist eine Kombination aus mechanischem und thermischem Perforieren gewählt, wobei in dem Perforationswerkzeug eine beheizten Zackenscheibe 55 oder eines beheizter, kronenartiger Perforationsstempels vorgesehen ist. Bei mechanischem Perforieren ist ein Arbeiten von der nichtklebenden Seite her erforderlich. Wird berührungsfrei mit einem Laserstrahl perforiert, so kann auch von der Klebeseite her gearbeitet werden.

Der Vollständigkeit halber sei noch erwähnt, daß es auch denkbar ist, das Perforieren des im Spannrahmen aufgenommenen Folienstückes in kinematisch umgekehrter Weise durchzuführen, was einen zusätzlichen Perforationsroboter entbehrlich machen könnte. Bei dieser Vorgehensweise würde nämlich der Spannrahmen-Roboter die Folie an einer ortsfest gehalterten Perforationseinrichtung entsprechend dem gewünschten Verlauf der Perforationslinien entlangführen. Hierbei könnten - je nach Bedarf für Einzellinie, Doppellinie, kleinformatige geschlossene Kontur - nacheinander verschieden Perforationseinrichtungen in Wirkstellung gebracht werden. Trotz der Einsparung eines zusätzlichen Perforationsroboters je Spannrahmen-Roboter ist diese Arbeitsweise in verschiedener hinsicht nachteilig. Der Spannrahmen-Roboter muß mit dem ohnehin sperrigen und schweren Spannrahmen weiträumige Bewegungen durchführen. Es müßte also ein mechanisch stärker belastbarer Spannrahmen-Roboter als in der weiter oben beschriebenen Arbeitsweise erforderlich eingesetzt werden, der zudem ein größeres Arbeitsvolumen überdecken kann. Dadurch werden die Kostenvorteile zum Teil wieder kompensiert. Außerdem leidet aufgrund des Handhabens des schweren Spannrahmens - im Vergleich zum Handhaben der wesentlich leichteren Perforationseinrichtung - die Taktzeit währen des Perforationsvorganges. Es kommt hinzu, daß u.U. der Raum für ein ungehindertes Handhaben des sperrigen Spannrahmens beim Legen der Perforationslinien nicht vorhanden ist. Zwar sind ohne weiteres Einsatzfälle denkbar, in denen die genannten Nachteile nicht zum Tragen kommen und die zuletzt beschriebene Handhabungsweise beim Perforieren sinnvoll ist, jedoch ist diese Alternative zeichnerisch nicht dargestellt.

Der durch das Perforieren vorbehandelte Folienzuschnitt wird anschließend vom Spannrahmenroboter 35 zur zugehörigen Oberflächenpartie 3, 4, 5 der lagedefiniert bereitgestellten Karosserie 1 ausgerichtet, auf sie abgesenkt und im ausgespannten und perforierten Zustand daran angelegt. Beim Anlegen der Folie an die gewölbte Karosserie-Oberfläche wird die Spannung des am Rand festgehaltenen Folienzuschnittes durch den Anlegevorgang erhöht. Damit er an den Perforationslinien nicht einreißt, wird in dieser Übergabephase die Randeinspannung auf einen geringeren Wert abgesenkt, so daß der Folienrand bei geringerer Zugspannung im Folienzuschnitt aus der Randeinspannung herausgleiten kann. Mittels einer gleitfähigen und elastischen Streichleiste 67 wird die Schutzfolie anschließend angedrückt. Zweckmäßigerweise werden zunächst alle zu schützenden Oberflächenpartien lose mit Schutzfolie beklebt und anschließend alle Folienabschnitte in einem einheitlichen Vorgang angedrückt.

Im Bereich überklebter Fugen 6 kann die Folie mittels eines robotergeführten Messers durchtrennt werden, wobei die Schnittränder beim dargestellten Ausführungsbeispiel mit einer rotierenden Bürste 87 angedrückt werden. Die bei der späteren Montage störenden Schutzfolienteile im Bereich von Zubauteilen werden entlang der perforierten Reißlinien - vorzugsweise manuell - abgezogen.

Das Abreißen der zu entfernenden Folienstücke kann auch automatisiert erfolgen, wozu zweckmäßigerweise die Spannrahmenroboter verwendet werden, nachdem diese ein bestimmtes Folienstück gerade auf eine Karosserie appliziert haben und sich ohnehin mit dem Spannrahmen in unmittelbarer Nähe der Karosserie befinden. Die vordere und/oder hintere Begrenzungskante der Schutzfolie, die an den Fensterausschnitt der Windschutzscheibe oder der Heckscheibe angrenzt, muß meist konturentsprechend geformt sein, weshalb auch die Folie entlang dieser Begrenzungskante perforiert und der Überstand antlang dieser Linie abgerissen wird. In den Fällen, in denen das Folienstück an den parallel zu den Fensterausschnitt-Begrenzungen durch die Saugleiste ergriffen wird, hält der Spannrahmen den abzureißenden Überstand der Folien ohnehin schon fest. In diesem Fall kann der Überstand durch eine geeignete, schräg nach unten abkippende Bewegung der Saugleiste bzw. des Spannrahmens, die im Einzelfall empirisch optimiert werden muß, abgerissen werden, indem das Vakuum an der Saugleiste aufrechterhalten oder, sofern es zum Nachgleiten-lassen des Folienrandes beim Anlegen der Folie reduziert worden war, sogar auf den ursprünglichen Wert wieder angehoben wird. Das abgerissene, noch an der Saugleiste haftende Reststück wird dann in einen Abfallbehälter abgeblasenen.

Es ist auch denkbar, einzelne, zunächst nicht von der Saugleiste festgehaltener Ausschnitte aus der Folie entlang perforierter Abreißlinien automatisiert abzureißen. Dazu können beispielsweise definiert geformte, vakuumbeaufschlagbare Sauger am Spannrahmen schwenkbar integriert sein. Diese können nach der Folienapplikation gezielt auf die abzureißenden Folienstücke abgesenken werden und diese mittels Vakuum festhalten. Beim Abheben des Spannrahmens von der Karosserie werden dann die festgesaugten, zu entfernenden Folienstücke zwangsweise entlang der zuvor perforierten Abreißlinien aus der applizierten Folie herausgelöst und von der Karosserie abgezogen. Beim Abheben des Spannrahmens von der Karosserie kann dieser dann eine für den Abreißvorgang optimierte, empirisch zu findende Bewegung ausführen, die den Abreißvorgang betriebssicher einleitet und ihn auch störungsfrei zu Ende führt. Das herausgerissene, vom Sauger noch festgehaltene Folienreststück muß dann bei vollautomatisiertem Betrieb mittels des Spannrahmenroboters über einen Abfallbehälter getragen und dort hinein abgeblasenen werden.

Mit Rücksicht auf ein einfaches und rückstandsfreies Entfernen der Schutzfolie nach Gebrauch, d.h. bei Kundenauslieferung des Fahrzeuges, ist die Hafteigenschaft der Klebeseite 25 der Schutzfolie bewußt geringer ausgebildet im Vergleich zu normalen Haftklebestreifen der Verpackungstechnik. Damit jedoch die Schutzfolie sich beim Fahren - es werden in folienbeklebtem Zustand auch Probe- und kurze Überführungsfahrten durchgeführt - durch den Fahrtwind nicht löst, werden die in Fahrtrichtung vorne liegenden Ränder der Schutzfolie durch einen quer verlaufenden Klebestreifen höherer Haftfähigkeit gesondert gesichert. Diese Sicherungsstreifen werden nach vollständiger Applikation der Schutzfolie in einer der nachgeschalteten Handarbeitsstationen 17 angebracht. Es ist in den Fällen, in denen der Folienzuschnitt an den Längsrändern der Schutzfolie mit einem Sicherungsstreifen an der Karosserie gesichert werden muß - z.B. beim Türen-Bekleben -, auch denkbar, diesen Sicherungsstreifen gleich mit der Schutzfolie am Rollenständer zusammenzuführen und diesen Folienverbund gemeinsam zu handhaben und zu applizieren. Auch ein automatisiertes Anbringen des Sicherungsklebestreifen mittels eines weiteren Applikationsroboters ist denkbar.

Nachdem bei einer serienmäßigen Folienbeschichtung von Fahrzeugkarosserien sehr viel Schutzfolie verbraucht wird, ist es zweckmäßig, einen automatischen Rollenwechsel in den Rollenständern für die Schutzfolie vorzusehen und/oder die Vorratsrollen so groß zu bemessen, d.h. so viel Schutzfolie in je einer Vorratsrolle aufzuwickeln, daß eine Vorratsrolle für den Bedarf einer vollständigen Arbeitsschicht ausreicht.

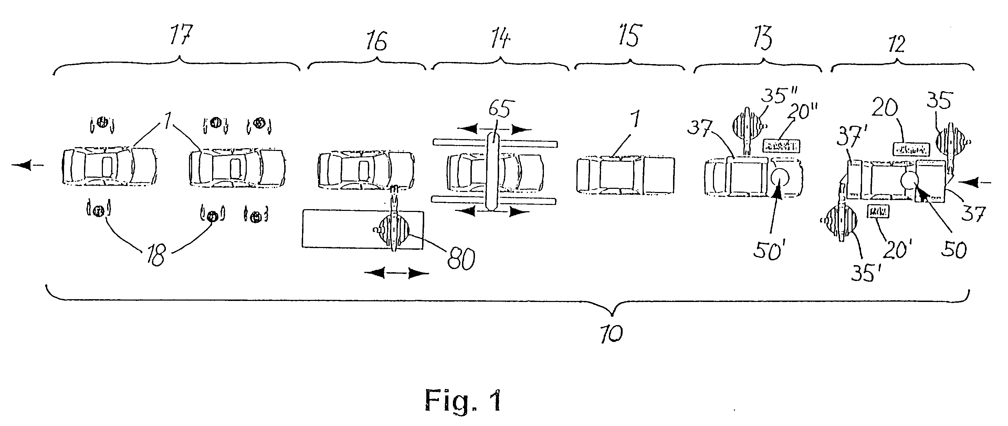

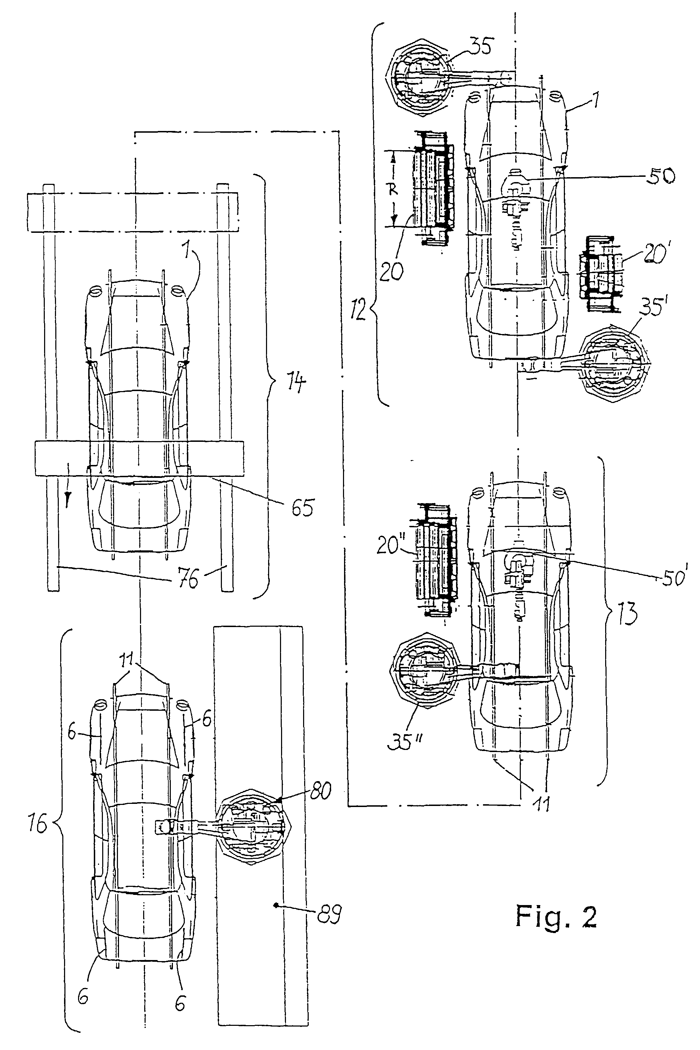

Die in Figur 1 dargestellte Fertigungslinie 10 zum automatisierten, serienmäßigen Bekleben von Personenkraftwagen weist mehrere transportmäßig verkettete Arbeitsstationen 12 bis 17 auf, durch die die zu beklebenden, auf Förderschlitten 11 lagedefiniert befestigten Karosserien 1 taktweise hindurchgefördert werden. In den einzelnen Arbeitsstationen 12, 13, 14 und 16 gemäß Figur 2 mit automatisiert durchzuführenden Arbeiten werden die Karosserien mittelbar über die Förderschlitten und in den Stationen vorgesehenen Fixiereinrichtungen innerhalb eines bestimmten Toleranzfeldes lagedefiniert festgesetzt. Dazwischen liegen Arbeitsstationen mit manuell durchzuführenden Arbeiten, in denen eine definierte Lagefixierung nicht erforderlich ist. Die einzelnen Arbeitsstationen sind um die Länge einer Karosserie zuzüglich eines Bewegungsspielraumes sowie Sicherheitsbereiches voneinander beabstandet.

Die Stufenheck-Karosserie enthält mehrere horizontale Oberflächenpartien, nämlich Motorhaube 3 mit angrenzenden Teilen der Kotflügel, Heckdeckel 4 ebenfalls mit angrenzenden Kotflügelbereichen sowie das Dach 5. Die darauf zu applizierende Schutzfolie 23 wird in Vorratsrollen 21 unterschiedlicher Breite R bevorratet, die in entsprechenden Rollenständern 20, 20', 20" verarbeitungsgerecht gehaltert werden. In der horizontal gelagerten Vorratsrolle 21 weist die nichtklebende Seite 24 nach außen. Nach einer Umlenkung der von der Vorratsrolle abgezogenen Schutzfolie über eine kleine, beweglich gelagerte Umlenkwalze - Tänzerwalze 22 - wird die Schutzfolie zu einer Saugleiste 27 geführt, an der das Folienende 26 an der nichtklebenden Seite - mit der Klebeseite 25 nach unten weisend - gehalten wird.

Die Schutzfolie ist aus unterschiedlichen Gründen mehr oder weniger stark statisch aufgeladen, was eine automatisierte Verarbeitung und Folienapplikation stört. Deshalb wird die Schutzfolie beim Abziehen von der Vorratsrolle antistatisch behandelt. Dies kann durch eine quer über die ganze Folienbreite auf der nichtklebenden Seite anliegende, geerdete Kontaktstange aus elektrisch gut leitendem Material geschehen. Um auch stärkere elektrische Ladungen rasch von der Schutzfolie entfernen zu können, kann ionisierte Luft auf die Schutzfolie geblasen werden, die die Ladung der Folie kompensiert.

Erfahrungsgemäß haften die einzelnen Lagen innerhalb des Wikkelverbundes der Vorratsrolle bei den inneren Wickellagen fester aneinander als bei den äußeren Wickellagen. Dies führt zu einer Erhöhung der Abzugspannung bei kleiner werdender Vorratsrolle. Andererseits soll jedoch die Schutzfolie mit gleichbleibender Folienspannung in den Spannrahmen übernommen werden. Zum Ausgleich etwaiger Störeinflüsse ist die erwähnte Tänzerwalze 22 vorgesehen, die auf einer Schwinge 31 - in Bezug auf die Vorratsrolle 21 - radialbeweglich gelagert und mittels eines Andrückzylinders 32 mit einstellbarer Kraft an den Umfang der Vorratsrolle andrückbar ist. Außerdem kann die Tänzerwalze 22 mittels einer nicht dargestellten Bremse mit gesteuert einstellbarem Bremsmoment abgebremst werden. Eine solche Bremse kann z.B. als axial beaufschlagbare Lamellenbremse oder als Konusbremse im Inneren der Tänzerwalze untergebracht sein. Aufgrund der Einstellbaren Kraft, mit der die Tänzerwalze zum einen an die Vorratsrolle angedrückt wird und aufgrund des Momentes, mit dem sie zum anderen abgebremst wird, kann ungeachtet von Änderungen des Durchmessers und der Lagenhaftung der Vorratsrolle eine gleichbleibend hohe Abzugskraft und somit eine gleichbleibende Übergabespannung in der Schutzfolie sichergestellt werden. Dadurch können gute Voraussetzungen für ein konstantes Applikationsergebnis der Schutzfolie geschaffen werden.

Es ist auch denkbar, eine von Stück zu Stück gleichbleibende Zugspannung in der Folie beim Übernehmen in den Spannrahmen dadurch zu erzeugen, daß vor der Übernahme der Folie durch die nachlaufende Saugleiste 39 des Spannrahmens 37 die Halteleiste 27 an der Folienbereitstellung wieder mit Vakuum beaufschlagt und die Folie daran festgehalten wird. Durch Weiterbewegen des Spannrahmens 37 in Abzugsrichtung a um ein bestimmtes, kurzes Wegstück kann eine definierte Spannung in der Folie aufgebaut werden. Erst anschließend wird das Vakuum in der nachlaufenden Saugleiste des Spannrahmens zugeschaltet und dadurch die Folie bei der bestimmten Zugspannung in den Spannrahmen übernommen.

Die Vorratsrollen sind hinsichtlich ihrer Größe vorteilhafterweise auf den Bedarf für eine vollständige Arbeitsschicht ausgelegt, so daß je Schicht nur ein Rollenwechsel erforderlich ist. Außerdem ist eine Einrichtung für einen automatischen Rollenwechsel vorgesehen, die derart ausgebildet ist, daß bei Verbrauch des letzten Folienstückes von der alten Vorratsrolle selbsttätig die neue, in Bereitschaft gehaltene Vorratsrolle in Gebrauch genommen und deren vorauslaufendes Folienende auf die Saugleiste 27 angelegt wird. Eine solche Rollenwechseleinrichtung ist allerdings im dargestellten Ausführungsbeispiel nicht gezeigt. Es sei deshalb lediglich erwähnt, daß anstelle der feststehenden Einzellagerung der einen Vorratsrolle 21 beiderseits im Rollenständer je eine mittig gelagerte Schwinge vorgesehen ist, an deren Enden je eine Vorratsrolle drehbar gehaltert ist. Von diesen beiden Vorratsrollen ist die eine in Gebrauchslage - wie im Beispiel dargestellt - positioniert, wogegen die andere Vorratsrolle um die Schwingenlänge abgerückt in Bereitschaft gehalten wird. Ferner müßte in der Einrichtung für eine automatisierte Übergabe des Folienendes an die Saugleiste 27 ein mit der Schwinge mitschwingender Bügel vorgesehen sein, der sich mit einer Stange über die Rollenbreite hinweg erstreckt. Zur Vorbereitung eines automatische Rollenwechsels müßte das Folienende mit der Klebeseite der Schutzfolie manuell an diese Stange angelegt werden. Beim Rollenwechsel würde dann dieser Bügel von unten an die Saugleiste 27 herangeschwenkt, wobei diese das Folienende der neuen Vorratsrolle übernimmt.

Je nach Produktionszahlen je Schicht und je nach Taktzeit beim Folien-Applizieren sind Vorratsrollen, die für eine Arbeitsschicht ausreichen, so schwer, daß sie nicht mehr auf ihrem Außenumfang abgelegt oder gehandhabt werden dürfen, weil die Folien sonst Druckstellen und die Wickel Flachstellen erhalten würden, die eine ordnungsgemäße Verarbeitung beeinträchtigen würden. Vielmehr müssen Folienrollen dieser Gewichts- bzw. Durchmesserklasse - die Folienbreite hat hier keinen entscheidenden Einfluß - stets im Zentrum mit einem speziellen Geschirr aufgenommen und in gesonderten Gestellen gelagert werden. Dazu müssen die Rollen mit einem metallenen Wickeldorn geliefert werden, der von der Herstellung des Wickels bis zum Verbrauch der Rolle bei ihr verbleibt und nach Verbrauch an den Hersteller zurückgeführt werden muß.

Die genannten Rollenständer sind in den beiden Beklebestationen 12 und 13 für Motorhaube und Heckdeckel bzw. für das Dach angeordnet. Für jede zu beklebende Oberflächenpartie 3, 4, 5 ist ferner jeweils ein Spannrahmen-Roboter 35, 35', 35" vorgesehen, der übliche sechs Bewegungsachsen aufweist und frei programmierbar ist. Der Rollenständer 20 und Spannrahmen-Roboter 35 für die Motorhaube 3 zum einen und der Rollenständer 20' und Spannrahmen-Roboter 35' für den Heckdeckel 4 zum anderen sind in der selben Arbeitsstation 12 angeordnet. Für die Folienapplikation auf das Dach 5 ist eine gesonderte Arbeitsstation 13 vorgesehen. In jeder Beklebe-Arbeitsstation 12 und 13 ist jeweils noch ein frei programmierbarer, vorzugsweise sechsachsiger Perforations-Roboter 50 bzw. 50' angeordnet. Und zwar sind diese aus Platzgründen derart oberhalb der Karosserie 1 angeordnet, daß der Arbeitsraum des Perforations-Roboters etwa mittig in der Arbeitsstation zu liegen kommt. Der Perforations-Roboter kann dazu an der Deckenkonstruktion der Halle oder an einem Portal hängend angebracht sein oder er kann seitlich an einer vertikalen Montagefläche - wandmontiert - gehaltert sein, beispielsweise an der Wand der Halle, an einem vom Hallenboden aufragenden Pylon oder an einer an der Hallendecke oder der Hallenwand befestigten Konsole.

An den Rollenständern wird das vorauslaufende Ende 26 der Schutzfolie 23 durch die Saugleiste 27 lagedefiniert und faltenfrei derart festgehalten und bereitgestellt, daß das Folienende auf der nichthaftenden Seite 24 zumindest bereichsweise zugänglich ist. Die ständerseitige Saugleiste ist an ihrer Unterseite 28 gelocht und kann saugwirksam mit Vakuum beaufschlagt oder auch belüftet werden, so daß die Haftwirkung der Saugleiste bedarfsweise und zeitlich gezielt aufgehoben werden kann. Die in Abziehrichtung a der Folie weisende Begrenzungskante der Saugleiste ist zinnenförmig konturiert, wobei auch die Vorsprünge 29 unterseitig saugwirksam gelocht sind. Dadurch kann die Schutzfolie bis unmittelbar zum Folienende 26 hin sicher festgehalten werden; gleichwohl ist das unmittelbare Folienende im Bereich zwischen den Vorsprüngen 29 oberseitig zugänglich.

Ferner ist in unmittelbarer Nachbarschaft zur Saugleiste 27 eine Vorrichtung 30 zum rechtwinkligen Abschneiden von abgezogener Schutzfolie vorgesehen. Diese Abschneidevorrichtung besteht im Wesentlichen aus einer quer zur Folienbahn verlaufende Führungsleiste, in der ein Messer mechanisch geführt und - z.B. mittels eines Pneumatikzylinders über einen Seilzug - angetrieben ist. Durch eine einmalige Querbewegung des Messers in der Führungsleiste wird ein abgezogenes Folienstück sicher vom Vorrat an der Saugleiste abgetrennt. Mit Rücksicht auf einen Messerverschleiß - die Schutzfolie muß mit kleiner Schneidkraft, d.h. ohne Gefahr einer Faltenbildung durchtrennt werden - muß ein einfacher und rascher Messerwechsel durch entsprechende bauliche Gestaltung sichergestellt werden. Auch ein automatisierbarer Messerwechsel oder ein Messer mit erhöhter Standzeit aufgrund besseren Messerwerkstoffes und/oder aufgrund verschiebbarer Klinge mit erhöhtem Verschleißvorrat (verschiebbare Langklinge oder verdrehbares Kreismesser) könnten von Vorteil sein.

Die Spannrahmen-Roboter 35, 35', 35" tragen an ihren Arbeitsarmen 36, 36', 36" jeweils einen auf die Größe der zu beklebenden Oberflächenpartie 3, 4, 5 abgestimmten, rechteckigen Spannrahmen 37, der an zwei gegenüberliegenden Längsseiten angeordnete Saugleisten 38, 39 zum Festhalten eines Folienzuschnittes 44 aufweist, und zwar eine vorauslaufende Saugleiste 38 und eine nachlaufende Saugleiste 39. Die einzelnen Saugleisten sind über separate Vakuumleitungen 46 bzw. 46' zuschaltbar bzw. belüftbar.

Die in Abziehrichtung a vorauslaufende Saugleiste 38 des Spannrahmens ist an der vom Rahmeninnern wegweisenden Längsseite - passend zur Zinnenkontur der ständerseitigen Saugleiste 27 - ebenfalls zinnenförmig konturiert. Und zwar sind die Vorsprünge 40 der Spannrahmen-Saugleiste 38 zwischen die Lücken der ständerseitigen Saugleiste 27 bis zur Berührung mit der Schutzfolie 23 eintauchbar. An der vorauslaufenden Saugleiste 38 sind lediglich die Stirnseiten 41 der Vorsprünge saugwirksam gelocht und mit Unterdruck beaufschlagbar. Bei der Folien-Übernahme werden die Stirnseiten dieser rahmenseitigen Vorsprünge zwischen die Vorsprünge der ständerseitigen Saugleiste 27 abgesenkt und mit den zugänglichen Bereichen des Foliendes 26 in Berührung gebracht, wodurch das bereitgehaltene Folienende durch den Spannrahmen 37 übernommen wird.

Die Vorsprünge 29 der ständerseitigen Saugleiste 27 sind schmaler (Breite b) als die Vorsprünge 40 der Spannrahmen-Saugleiste 38, die mit einer Breite B ausgebildet sind. Die schmalen Vorsprünge brauchen lediglich das Folienende faltenfrei festzuhalten, wogegen die breiten Vorsprünge 40 der Spannrahmen-Saugleiste die hohen Abzugskräfte der selbsthaftenden Schutzfolie von der Vorratsrolle übertragen müssen. Zur Erhöhung der pneumatischen Haltekraft der Spannrahmen-Saugleisten sind die Bohrungen der Halteflächen auf der Kontaktseite großflächig angesenkt. Es ist hierbei zu berücksichtigen, daß die Folie aufgrund der Selbsthaftung sich nur unter hohem Kraftaufwand von der Vorratsrolle 21 abziehen läßt. Um das Folienende beim Abziehen sicher an der Spannrahmen-Saugleiste 38 festhalten zu können, ist diese mit verschwenkbaren Greifmitteln 43 zum zusätzlichen Festhalten der Schutzfolie versehen. Die klappenartigen Greifmittel sind - angetrieben durch Schwenkzylinder 49 - um eine Schwenkachse 48 verschwenkbar und können unter Vorspannung an die unterdruckbeaufschlagbare Stirnseite 41 der Vorsprünge 40 angelegt werden.

Zum Übernehmen eines Folienzuschnittes 44 vom Rollenständer 20 wird der Spannrahmen 37 quer zur Schutzfolie 23, also im Beispiel vertikal, mit der vorauslaufenden Saugleiste 38 derart an die Schutzfolie bzw. die ständerseitige Saugleiste 27 angesetzt, daß die Stirnseiten 41 der rahmenseitigen Vorsprünge 40 zwischen die Lücken der ständerseitigen Saugleiste eintauchen und an der nichtklebenden Seite 24 der Folie anlegen. Nun wird die vorauslaufende Saugleiste mit Vakuum beaufschlagt und die Greifmittel werden geschlossen, so daß sie sich an die Klebeseite 25 des aufgenommenen Folienendes anlegen. Die ständerseitige Saugleiste 27 wird nun belüftet, so daß das Folienende frei wird. Durch paralleles Fortbewegen der vorauslaufenden Saugleiste 38 des Spannrahmens vom Ständer 20 weg mittels des Spannrahmen-Roboters 35 wird eine abgemessene Länge von Folie von der Rolle 21 abgezogen, wobei der Spannrahmen zugleich in Richtung auf die Horizontale hin geschwenkt wird, so daß sich gegen Ende der Abzugs- und Schwenkbewegung auch die nachlaufende Saugleiste des Spannrahmens an die Folie anlegt. In diesem Zustand befinden sich die zweite rahmenseitige Saugleiste 39 und die ständerseitige Saugleiste 27 in dichtem Abstand nebeneinander. Beide benachbarten Saugleisten werden - so lange die Folie noch unter der Spannung des Abziehens steht - mit Vakuum beaufschlagt und danach die Abschneidevorrichtung 30 betätigt, so daß ein Folienzuschnitt 44 im Spannrahmen 37 ausgespannt und vom Spannrahmen übernommen wird. Während des Folien-Durchschneidens ist die Folie dies- und jenseits der Abschneidevorrichtung 30 durch Saugleisten 38 und 27 sicher festgehalten, so daß keine Gefahr einer Faltenbildung durch die Krafteinwirkung des bewegten Folientrennmessers entsteht. Nach dem Abschneiden steht ein neues Folienende 26 an der ständerseitigen Saugleiste 27 für einen neuen Übernahmefall lagedefiniert und faltenfrei bereit.

Es ist im praktischen Betrieb nie ganz auszuschließen, daß der Spannrahmen-Roboter 35 mit dem sperrigen Spannrahmen 37 einmal irgendwo kollidiert, insbesondere während der Einrichtungsphase des Roboters oder wenn in der Anlage irgendwelche Wartungsarbeiten durchgeführt werden. Kleinere Kollisionen werden in der Regel vom Roboter und im Wesentlichen auch vom Spannrahmen schadlos überstanden, jedoch kann sich der Spannrahmen durch eine kleine Kollision verziehen. Um solche geringfügigen Deformationen kompensieren zu können, sind die Saugleisten 38 und 39 justierbar am Spannrahmen gehalten. Sie sind hinsichtlich Parallelität zueinander und zur Sollebene des Spannrahmens einstellbar und müssen zu diesem Zweck bezüglich wenigstens zwei Raumrichtungen justierbar sein. Außerdem müssen die für die Folienlage maßgebenden Flachseiten der beiden Saugleiste fluchtend zueinander eingestellt werden können; es muß also auch die Umfangslage in einem gewissen Maß einjustiert werden können. Diese Art der mehrfachen Justierbarkeit der Spannrahmen-Saugleisten ist in den Zeichnungen jedoch nicht dargestellt. Sollten einmal größere Beschädigungen am Spannrahmen - ungeachtet welcher Art oder Ursache - auftreten, so muß der gesamte Spannrahmen rasch ausgewechselt werden können, damit keine langen Produktionsunterbrechungen entstehen. Alle mechanischen Vebindungen zwischen Spannrahmen und Roboterarm und alle Leitungen müssen also rasch getrennt und wieder geschlossen werden können. Selbstverständlich muß für einen solchen Schadens- bzw. Reparaturfall ein ordnungsgemäßer Spannrahmen mit allem Zubehör legedefiniert im Zugangsbereich des Spannrahmen-Roboters bereitgehalten werden.

Damit gegen Ende der Übergabephase des Folienzuschnittes vom Spannrahmen an die - gewölbte - Karosserieoberfläche die mechanische Spannung in der Folie nicht zu groß und die Gefahr eines Folienrisses entlang der Perforationslinien vermieden wird, ist ein Nachgleiten des Folienrandes aus der Randhalterung der Folie vorgesehen. Dies ist bei den Saugleisten 38 und 39 durch eine gestufte Absenkung des haftwirksamen Unterdruckes realisiert. Und zwar werden die Saugkammern der Saugleisten über eine zeitgerecht aufsteuerbare By-pass-Leitung nur partiell belüftet, bleiben aber noch an die Unterdruckquelle angeschlossen, so daß Außenluft eingeschnüffelt wird und sich ein Unterdruckwert mit reduzierter Haftwirkung in der Saugleiste einstellt. Durch entsprechende Bemessung des By-Pass-Querschnittes kann die Haftwirkung in der Übergabephase der Folie so beeinflußt werden, daß der Folienrand bei noch tolerierbarer Folienspannung von der Saugleiste heruntergleitet.

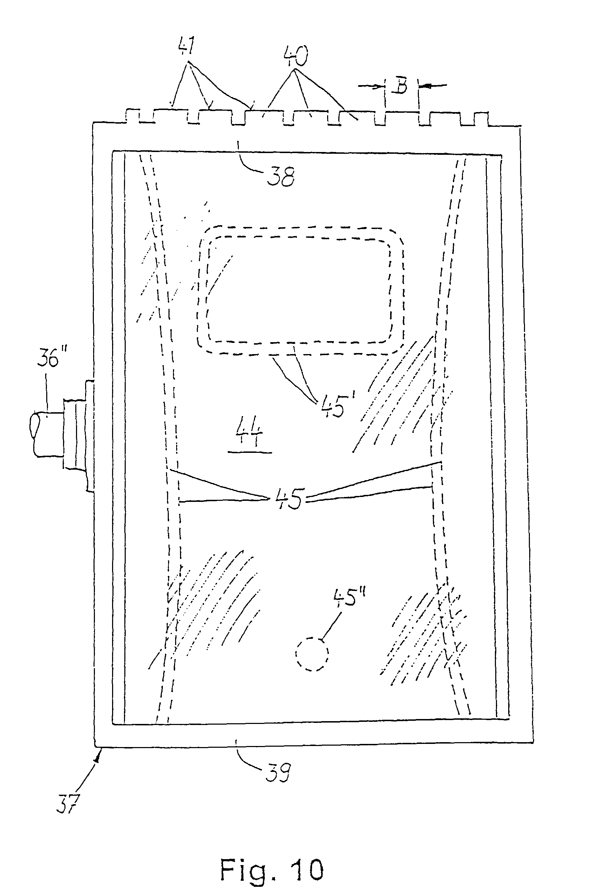

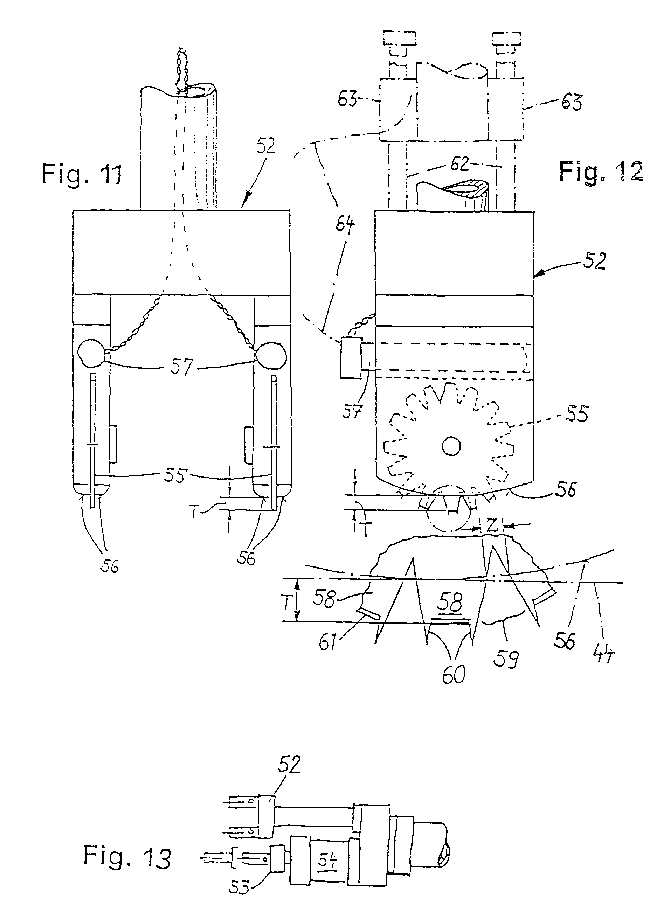

Die in den Beklebestationen 12 und 13 mit ihrem Arbeitraum etwa mittig von und oberhalb der Karosserie angeordneten Perforations-Roboter 50, 50' tragen an ihrem Arbeitsarm 51 ein Perforationswerkzeug, mit dem Abreißlinien 45, 45', 45" in das seitens des Spannrahmen-Roboters ausgespannt gehaltene Folienstück 44 perforiert werden sollen. Zu diesem Zweck weist das Perforationswerkzeuges wenigstens eine kreisförmige, frei drehbar gelagerte, am Außenumfang gezahnte Zackenscheibe 55 aus Metall, vorzugsweise aus einem korrosionsbeständigem Stahl, mit einer Stärke von etwa 0,5 bis 1 mm auf. Die Zackenscheibe ragt nur mit ihrem gezahnten Außenumfang zwischen thermisch isoliert gehaltenen Gleitkufen 56 hervor, die beim Perforieren der Schutzfolie 44 auf ihr entlanggleiten und die Eindringtiefe T der Zackenscheibe in die Schutzfolie begrenzen. Im übrigen Bereich ist die Zackenscheibe mit geringem Axialspiel von wärmeleitendem und aufgeheiztem Werkstoff des Perforationswerkzeuges umgeben, so daß über diese Zonen Wärmeenergie in die Zackenscheibe übertragen werden kann. In dem hinter der Zackenscheibe liegenden Bereich ist im Perforationswerkzeug eine Heizvorrichtung 57 in Form einer Heizpatrone zur kontrolliert temperaturgenauen Beheizung der Zackenscheibe angeordnet. Beispielsweise soll die Zackenscheibe auf eine konstante Temperatur im Bereich von 120 bis 180 °C mit einer Temperaturschwankung von ± 2 Grad beheizt werden. Die optimale Höhe der Zackenscheiben-Temperatur hängt von der Folie - Werkstoffart, Foliendicke - und von der Arbeitsgeschwindigkeit ab und muß fallweise empirisch optimiert werden. Das Perforationswerkzeug ist im Ausführungsbeispiel nach Figur 10 und 11 als Tandemwerkzeug mit zwei parallel nebeneinander angeordneten Zackenscheiben ausgebildet. Damit können zeitgleich zwei äquidistant verlaufende Perforationslinien 45, 45' in die Schutzfolie gelegt werden.

Figur 13 zeigt ein Mehrfachwerkzeug als Perforationswerkzeug mit einem Mono-Perforationswerkzeug 53 und mit einem Tandem-Perforationswerkzeug 52. Die Werkzeuge 52 bzw. 53 können alternativ und wahlweise in Wirkstellung gebracht werden, so daß wahlweise eine einzelne Perforationslinie 45" oder simultan zwei äquidistant verlaufende Perforationslinien 45, 45' in die Schutzfolie gelegt werden können. Das Mono-Perforationswerkzeug 53 ist mittels eines Hubzylinders vor das Tandemwerkzeug 52 vorschiebbar, so daß es in dieser strichpunktiert angedeuteten Position wirksam ist. In der zurückgezogenen, in vollen Linien dargestellten Position ist das Tandemwerkzeug 52 wirksam.

Es ist sogar zweckmäßig, bereits bei dem Tandem-Perforationswerkzeug nach den Figuren 11 und 12 eine der beiden Zackenscheiben nach dem Vorbild der Figur 13 zwischen zwei Endpositionen verschiebbar zu lagern, wobei in einer Endposition beide Zackenräder und die zugehörigen Gleitkufen positionsgleich und in der anderen Endposition die Zackenräder höhenversetzt liegen. In der Einstellung mit positionsgleichen Zackenrädern können simultan zwei äqudistante Perforationslinien gezogen werden, wogegen bei höhenversetzt eingestellten Zackenrädern nur das exponiert liegende Zackenrad wirksam wird; in dieser Einstellung können Mono-Perforationslinien gelegt werden. Der Vorteil eines solcherart ausgebildeten Perforationswerkzeuges liegt nicht nur in einem verminderten baulichen Aufwand, sondern vor allem in einer kompakten Bauweise, was beim randnahen Perforieren der innerhalb eines Spannrahmens ausgespannten Folienzuschnitte besonders wichtig ist.

Damit der Abstand eines Paares äquidistanter Perforationslinien seitens des Tandem-Perforationswerkzeuges eingestellt werden kann, ist es zweckmäßig, wenn die Halterung zumindest einer der beiden Zackenscheiben 55 in unterschiedlichen Abstandslagen zur anderen Zackenscheibe im Tandemwerkzeug fixierbar ist. Dies kann z.B. durch Beilagstücke oder durch eine Verschraubung unter Verwendung von Langlöchern geschehen.

An sich können die Folienstücke zum Perforieren der Abreißlinien in jeder beliebigen Lage, also horizontal, vertikal oder auch geneigt im Spannrahmen gehalten werden. Die im Ausführungsbeispiel gezeigte horizontale Anordnung der Folie beim Perforieren ist nicht nur platzsparend, weil sie das Perforieren in einem sonst nicht nutzbaren Bereich oberhalb der Karosserie ermöglicht, sondern sie bietet auch die Möglichkeit zu einer einfachen Kompensation des Foliendurchhanges unter der Einwirkung der Perforationskräfte, nämlich durch Schwerkrafteinfluß. Der Durchhang der im Spannrahmen ausgespannten Folie durch ihr Eigengewicht ist praktisch vernachlässigbar. Problematischer ist ein Ausweichen der gespannten Folie unter der Krafteinwirkung des Perforationsvorganges, welches hier - kurz, wenn auch nicht ganz korrekt - mit "Durchhang" bezeichnet ist und für jede Relativlage der Folie zur Schwerkraftrichtung bei sonst gleichen Voraussetzungen in annähernd gleicher Größe auftritt. Die Größe dieses Durchhanges ist im übrigen von der Größe des Folienstückes, von der Folienspannung, von der Elastizität der Folie und von der jeweiligen Position innerhalb der Folie, an der perforiert werden soll, abhängig. In einem ersten Lösungsansatz des Problemes der Durchhang-Kompensation könnte dieser Durchhang in der Robotersteuerung berücksichtigt werden, was die Roboterprogrammierung jedoch sehr kompliziert machen würde. Vereinfachend könnte ein konstanter Durchhang für alle Foliengrößen und vor allem für alle Positionen angenommen werden, was jedoch beim Perforieren zu einer sehr starken Beanspruchung der Folie im randnahen Bereich führen würde. Zweckmäßigerweise ist in diesem Zusammenhang eine im Perforationswerkzeug integrierte Einrichtung zur Kompensation des erwähnten Durchhanges vorgesehen, die zeichnerisch in Figur 12 strichpunktiert angedeutet ist. Das Perforationswerkzeug ist mit einer Ausgleichsführung versehen, die in Arbeitsstellung des Perforationswerkzeuges eine quer zur Folienfläche gerichteten Relativbewegung zum Ende des Roboterarmes, also relativ zur Roboterhand erlaubt, d.h. das Perforationswerkzeug kann quer zur Folie frei "tänzeln". Ferner umfaßt die Kompensationseinrichtung einen Antriebsmechanismus, mit dem der beweglich geführte Teil des Perforationswerkzeuges mit definierter Kraft in Richtung zur Folie hin gespannt werden kann.

Die quer zur Folie gerichtete Tänzelführung könnte beispielsweise durch eine Stangenführung mit zwei parallel zueinander angeordneten Führungsstangen 62 realisiert sein, die - angewandt auf das Perforationswerkzeug nach Figur 11 und 12 - rückwärtig von dem beheizbaren, die Zackenscheibe 55 tragenden Block abragen würde und die leichtgängig aber verkantungssicher in entsprechenden Führungsbuchsen 63 im Hinteren Teil des Perforationswerkzeuges geführt sein müßten. Wichtig hierbei wäre, daß die Anschlüsse zu Versorgung der Heizpatrone mit elektrischer Energie aufgrund einer Verwendung von dünnadrigen Litzen und aufgrund einer leicht flexiblen Isolation sowie aufgrund einer Zuleitung in einen weitgeschwungenen Bogen 64 ebenfalls leichtgängig bewegt werden können. Am rückwärtigen, aus den Führungsbohrungen herausragenden Ende der Führungsstangen sind Anschläge zur Hubbegrenzung des beweglichen Teils des Perforationswerkzeuges angebracht; es soll nicht aus der Führung herausfallen dürfen.

Der Antriebsmechanismus zum Andrücken des beweglichen Teils des Perforationswerkzeuges an die Folie kann im einfachsten Fall, nämlich bei horizontaler Anordnung der Folie beim Perforieren, durch eine entsprechende, gewichtsmäßige Dimensionierung des beweglichen Teils des Perforationswerkzeuges erfolgen. Sollte die erforderliche Andrückkraft durch das Eigengewicht aller ohnehin erforderlichen Teile bereits überschritten sein, so kann eine Entlastung durch mindestens eine Zugfeder mit sehr flacher Federkennlinie erfolgen, die zwischen dem tänzelnd geführten Teils des Perforationswerkzeuges und dem unbeweglich der Roboterhand zugeordneten Werkzeugteilen parallel und symmetrisch zu den Führungsstangen ausgespannt ist. In ebenfalls einfacher Weise kann die erforderliche Kraft zum Anpressen des beweglichen Teils des Perforationswerkzeuges an die Folie durch eine oder mehrere zur Folie hin gerichtete Federn mit sehr flacher Federkennlinie erzeugt werden. Aufwendiger aber zeitlich steuerbar und wegunabhängig konstant kann die Anpreßkraft durch einen vorzugsweise pneumatisch beaufschlagbaren Arbeitszylinder aufgebracht werden.

Bei den in den Ausführungsbeispielen gezeigten, thermisch-mechanischen Perforationswerkzeugen ist eine drehbare Zackenscheibe 55 als wesentliches Perforationsorgan vorgesehen. Diese Zackenscheibe ist passiv, nämlich nicht-angetrieben, d.h. sie rollt beim Perforationsvorgang gewissermaßen auf der Folie ab. Das Perforationswerkzeug wird in Richtung der Perforationslinie zwangsweise, d.h. mittels der Roboterhand, über die ausgespannte Folie hinwegbewegt. Es kann in bestimmten Fällen durchaus sinnvoll sein, diese Verhältnisse kinematisch umzukehren und die Zackenscheibe mit einem Antrieb zu versehen und das Perforationswerkzeug entlang einer vorgesehenen, leichtgängigen "passiven" mechanischen Führung entlang zu führen, wobei das Perforationswerkzeug durch die Zackenscheibe angetrieben wird. Als Führung kann beispielsweise ein Paar von parallelen, frei ausgespannten Führungsdrähten - Seilbahnprinzip - oder eine dem gewünschten Verlauf der Perforationslinie folgenden Führungsschiene nach Art einer kleinen Einschienen-Hängebahn vorgesehen werden.

Aufgrund häufiger und nicht unbeträchtlicher Temperaturschwankungen des beheizten Perforationswerkzeuges - Aufheizen bei Arbeitsaufnahme, Abkühlen bei Arbeitsunterbrechungen - besteht die Gefahr, daß sich Verschraubungen an diesem Werkzeug lockern und dies zu Störungen führt. Deshalb müssen die Verschraubungen im Bereich des Perforationswerkzeuges entweder temperaturstabil ausgeführt und gegen thermisch verursachtes Lockern gesichert werden, oder die Werkstückteilung und die Verschraubungen müssen - soweit dies konstruktiv möglich ist - in einen Bereich verlagert werden, in dem eine Erwärmung des Perforationswerkzeuges nicht oder nur vermindert auftritt.

Um im Falle eines etwaigen Schadens an einem Perforatrionswerkzeug trotzdem rasch weiterarbeiten zu können, sind die Verbindungen des Werkzeuges 52 mit dem Roboterarm 51 einfach ausgebildet und hinsichtlich einer raschen Lösbarkeit und Montierbarkeit optimiert. Gleiches gilt auch für die Leitungsverbindungen zu den Werkzeugen, die als Steckverbindungen ausgebildet sind. Selbstverständlich muß für jeden Perforationsroboter greifgerecht wenigstens ein intaktes Perforationswerkzeug in Reserve bereitgehalten werden.

Da der Perforationsroboter 50, aber auch der Aufschneidroboter 80 räumlich komplizierte Bewegungen und starke Arm- und Handdrehungen ausführt, werden die zu den Roboterwerkzeugen führenden Leitungen stark beansprucht. Um die Gefahr eines Leitungsdefektes zu minimieren, ist es zweckmäßig, an den Gelenkstellen Drehübertrager für die einzelnen Leitungen vorzusehen, deren Achsen parallel oder konzentrisch zu den jeweiligen Achsen des Roboterarmes liegen.

Für ein betriebssicheres Perforieren der Folie kommt es auf die Ausbildung des gezahnten Umfanges der Zackenscheibe 55 des Perforationswerkzeuges an. Und zwar sind am Umfang der Zackenscheibe mehrere Zähne 58 von etwa 3 bis 8 mm Umfangserstreckung angebracht, die durch tief eingeschnittenen Zahnlücken 59 voneinander beabstandet sind. Die Zahnlücken springen hinter die Gleitkufen 56 des Werkzeuges zurück. Dadurch tauchen nur die Zähne 58 in die Schutzfolie perforierend ein. Am vorderen und hinteren Ende eines jeden Zahnes 58 der Zackenscheibe ist jeweils ein spitz auslaufender Dorn 60 von wenigstens etwa 2 mm radialer Erstreckung angeformt und der zwischen den beiden Dornen eines Zahnes befindliche Zahnrücken ist - zumindest dann, wenn stärkere Zackenscheiben von mehr als etwa 0,8 mm Stärke eingesetzt werden - jeweils mit einer schneidenartigen Anschärfung 61 versehen. Bei einer Blattstärke von etwa 0,5 mm oder 0,6 mm kann auf ein Anschärfen verzichtet werden. Die Breite Z der Zahnlücken 59 am Umfang der Zackenscheibe auf der Höhe der Gleitkufen beträgt etwa 1 bis 3 mm. Dieses Maß bestimmt die Länge der verbleibenden Restquerschnitte in der perforierten Folie. Dieses Maß muß fallweise ebenfalls durch Versuche optimiert werden. Einerseits dürfen die nach dem Perforieren verbleibenden Restquerschnitte nicht zu gering sein, damit sich die perforierte Folie noch sicher bearbeiten, d.h. weiter perforieren und auch sicher handhaben läßt. Andererseits sollen die Restquerschnitte klein genug sein, damit sich die montagebedingt zu entfernenden Folienstücke entlang der Perforationslinien auch betriebssicher abreißen lassen, ohne daß sich beim Abreißen die verbleibende Folie von der Karosserie löst oder einreißt.

Zum Perforieren in sich geschlossener Konturlinien insbesondere von kleinem Ausmaß, z.B. Kreise, Rechtecke o.dgl. können auch kronenartig geformte, ebenfalls beheizbare Perforationsstempel verwendet werden. Deren Zackenkranz ist zweckmäßigerweise ähnlich geformt wie die Zackenscheibe 55, wobei sich die Zacken jedoch alle parallel zur Einstechrichtung erstrecken. Der Zakkenkranz ist zumindest außenseitig von einem kalt bleibenden Anschlagring umgeben, der gegenüber den Spitzen der Zacken um ein bestimmtes Maß zurückversetzt ist und die Eintauchtiefe des Zackenkranzes in die Folie begrenzt, also somit den Perforationsgrad festlegt. Anwendungsfälle für solche in sich geschlossenen Konturlinien sind Ausschnitte für örtliche Zubauteile wie Antennen, Waschwasserdüsen, Firmenembleme, Türgriffe, Lüftungsgitter od. dgl.

Die geschlossene Konturlinie kann u.U. eine größere gestreckte Länge erreichen, z.B. weil das auszusparende Zubauteil größer ist oder wenn die Konturlinie einen komplizierten Verlauf hat. Ab einer bestimmten gestreckte Länge der Konturlinie werden die erforderlichen Kräfte zum perforierenden Eindrücken eines kronenartigen Perforationsstempels in die Folie bedenklich groß, so daß die Gefahr besteht, daß andere bereits gelegte Perforationslinien einreißen oder die Folie sich - zumindest teilweise - unkontrolliert an der Randeinspannung lockert. Es kann daher zweckmäßig sein, Konturlinien einer größeren gestreckten Länge der angesprochenen Art durch mehrere unterschiedliche Perforationsstempel schrittweise zu erzeugen, wobei jeder der Perforationsstempel lediglich einen Teilumfang der gesamten Konturlinie perforiert. Hierbei ist es auch sinnvoll, gewisse geometrische Grundelemente wie gerades Linienstück, Halbkreis, Viertelbogen, rechter scharfkantiger Winkel sowie spezielle Sonderformen als Perforationsstempel bereitzustellen. Durch sternförmige Anordnung dieser verschiedenen Perforationsstempel an einem Mehrfachwerkzeug - ähnlich dem Prinzip eines Typenrades bei elektrischen Schreibmaschinen - können dann in universeller Weise beliebige Konturen perforiert werden. In der Regel wird man jedoch versuchen, diese Art des Perforierens zu umgehen, weil das sukzessive Perforieren kleiner Längenabschnitte zeitraubend und nur unter zwingender Notwendigkeit gerechtfertigt ist.

Eine andere Möglichkeit zur Vermeidung unzumutbar starker Folienbeanspruchung beim Eindrücken von Perforationsstempeln besteht darin, die Folie während des Einstechens an den Perforationsstempel anzusaugen. Dazu ist der von dem Zackenkranz des Perforationsstempels umschlossene Bereich mit einem Vakuumanschluß zur Einleitung eines geringen Unterdruckes nach Art eines Staubsaugers versehen. Zum Herausziehen des Perforationsstempels nach dem Perforieren aus der Folie muß der zuvor teilevakuierte Bereich möglichst rasch zumindest wieder auf Atmosphärendruck gebracht werden. Besser ist es, sogar einen leichten Überdruck in den vom Zackenkranz umschlossene Bereich einzuleiten, so daß die Folie pneumatisch vom Perforationsstempel abgedrückt wird.

Es ist ja Zweck der Perforationslinien, daß entlang der damit geschaffenen Abreißlinien bestimmte Folienabschnitte im Bereich von Zubauteilen entfernt werden. Größere Folienabschnitte dürfen erst nach der Applikation der perforierten Folie auf der Karosserie abgerissen werden; beim Versuch, größere Folienabschnitte noch vor dem Applizieren zu entfernen, geht der Zusammenhalt der Folie und ihre Handhabbarkeit verloren. Anders ist es hingegen bei kleineren, durch eine in sich geschlossene Perforationslinie abgeteilte Folienabschnitte. Diese können ohne Beinträchtigung der Stabilität oder Handhabbarkeit der perforierten Folie auch schon vor dem Applizieren entfernt werden. Hier ist ein vorheriges, mit dem Perforatinsvorgang integriertes Entfernen des ausgestochenen Folienabschnittes besonders vorteilhaft. Das nachträgliche Entfernen kleinerer, durch eine in sich geschlossene Perforationslinie abgeteilter Folienabschnitte aus der bereits applizierten Folie ist nämlich besonders mühevoll und zeitraubend, weil der "Anfang" der Perforation schwierig zu ergreifen ist, zumal er auf einer empfindlichen Lackoberfläche liegt, die nicht beschädigt werden darf.

Um Folienabschnitte, die durch eine in sich geschlossene Perforationslinie abgeteilt sind und die durch einen einheitlichen, kronenartigen Perforationsstempel "ausgestochen" wurden, unmittelbar anschließend an das Perforieren entfernen zu können, ist es zweckmäßig, den Perforationsgrad möglichst hoch zu wählen. Es kann in diesem Zusammenhang vorteilhaft sein, auf tragende Restquerschnitte ganz zu verzichten und den betreffenden Folienabschnitt vollständig auszustechen. Die in die Folie perforierend eindringenden Zacken eines hierfür präparierten Perforationstempels verbreitern sich zu den Nachbarzacken und ergänzen sich gegenseitig noch innerhalb der definierten Eintauchtiefe zu einer ununterbrochenen Trennlinie. Es ist auch denkbar, nur sehr kleine Restquerschnitte zwischen benachbarten Perforationsschlitzen übrig zu lassen. Beispielsweise kann der verbleibende Restquerschnitt weniger als 5% betragen.

Um aus der Folie einen Ausstich mit so geringen oder gar keinen tragenden Restquerschnitten betriebssicher und verzugsfrei mit einem Perforationsstempel erzeugen zu können, ist die bereits oben erwähnte Vakuum-unterstützte Anpressung der Folie an den Perforationsstempel zu empfehlen. Es muß jedoch wegen der Verstopfungsgefahr der Absaugleitung durch etwaige ausgerissene Folienabschnitte verhindert werden, daß diese in die Absaugleitung eintreten können. Dies kann z.B. durch ein engmaschiges Stützgitter bewirkt werden, welches die vom Zackenkranz eingeschlossene, freie Fläche ausfüllt und an das sich die ausgestochene Folie bei Unterdruckwirkung anlegen kann. Zum Entfernen des ausgestochenen Folienstückes aus der Folie kann der Perforationsstempel zusammen mit dem darin pneumatisch festgehaltenen Folienstück aus der Folie herausgezogen werden. Soweit noch gewisse Restquerschnitte - beabsichtigt oder unbeabsichtigt - im Bereich der Perforationslinie verblieben sind, werden diese durch die Abzugsbewegung des Perforationsstempels durchgerissen. Das ausgestochene Folienstück verbleibt so lange innerhalb des Perforationsstempels, solange der Unterdruck noch wirkt. Der Perforationsstempel kann in diesem Zustand über einen Auffangbehälter verbracht werden und dort das ausgestochene Folienstück durch einen Druckluftstoß aus dem Zackenkranz des Perforationsstempels herausgelöst und in den Auffangbehälter abgeschleudert werden.

Die bisher geschilderten Perforationsvorgänge finden in den Beklebestationen statt. Im Anschluß an die Beklebestationen 12 und 13 ist beim dargestellten Ausführungsbeispiel sicherheitshalber eine Leerstation 15 zwischegefügt, in der im Störungsfalle die Folienapplikation manuell durchgeführt werden kann.

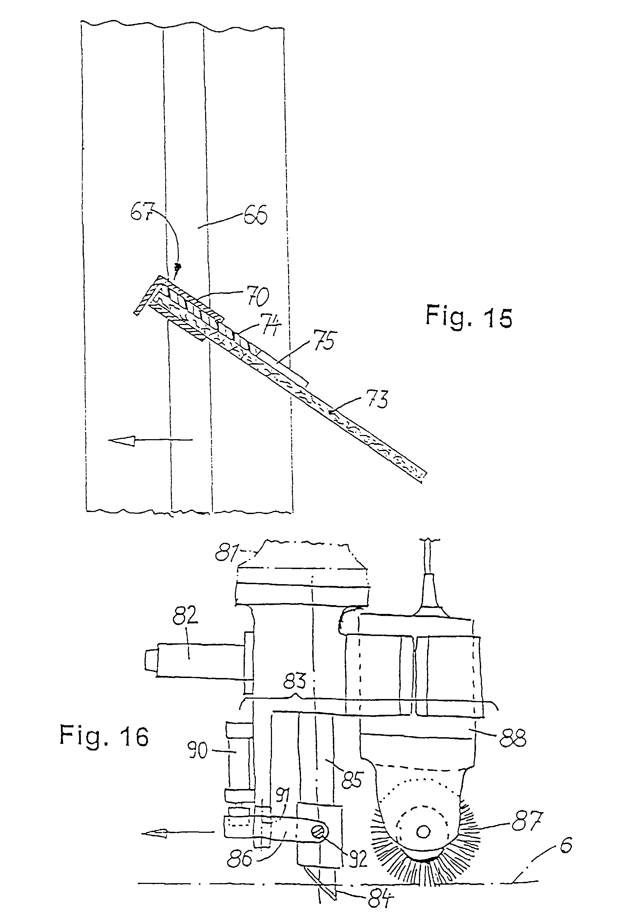

Generell schließt sich nach dem Folienapplizieren die Andrückstation 14 an, in der die perforierten und lose aber faltenfrei an die Karosserie applizierten Schutzfolienstücke gemeinsam an die Oberflächenpartien angedrückt werden, wodurch sich ihre Haftung verbessert. Zu diesem Zweck ist in der Andrückstation 14 ein in Längsrichtung zur Fahrzeugkarosserie auf einer Bodenführung 76 verschiebbares und mit einem entsprechenden Antrieb versehenes Portal 65 vorgesehen, das die Fahrzeugkarosserie überspannt. Innerhalb der Öffnung des Portales erstreckt sich horizontal eine elastische und gleitfähige Streichleiste 67 über die gesamte Fahrzeugbreite, die in ihrer Form an die Querschnittskontur der zu überklebenden Oberflächenpartien grob angepaßt ist. Zur Konturanpassung ist die Streichleiste aus einem geradligen, mittigen Leistenabschnitt 68 und aus zwei spiegelbildlich geneigt angeordneten, seitlichen Leistenabschnitten 69 und 69' zusammengesetzt. Die Streichleiste 67 ist in einer Vertikalführung 66 verkantungssicher - rechts gegen links - aufund abbeweglich geführt, wobei sie ihre eingestellte Neigung zur Fahrzeuglängsachse (siehe Figur 15) beibehält. Außerdem ist das Portal mit einem Hubantrieb für die Steichleiste ausgerüstet, mit dem die Streichleiste angehoben und vorsichtig auf die Karosserie abgesenkt werden kann. In dem auf die Karosserie abgesenkten Zustand liegt die Streichleiste in jeder Höhe mit einer definierten Kraft lose auf der Fahrzeugkarosserie auf und drückt damit die Folien an die Karosserie an. Diese Andrückkraft ergibt sich schwerkraftbedingt durch das Eigengewicht der Streichleiste und durch etwaige in der Vertikalführung untergebrachte Zusatzgewichte. Die Streichleiste vermag beim Entlangfahren des Portales über die Karosserie der Längskontur der Karosserie zwanglos zu folgen.

Beim dargestellten Ausführungsbeispiel ist der tragende Teil der Streichleiste durch ein Winkelprofil 70 gebildet, an das ein steifer Filzstreifen von etwa 15 mm Stärke und etwa 20 cm Breite angeschraubt ist. Oberseitig ist zur Versteifung des Filzes eine Kunststoffleiste 74 aus einem faserverstärkten elastischen Kunststoff zwischen Winkelprofil 70 und Filzleiste 73 zwischegefügt, wobei die freiliegende Seite der Kunststoffleiste durch eine Vielzahl eng benachbarter Einschnitte 75 kammartig gezahnt und dadurch am freiliegenden Rand in ihrer Nachgibigkeit reduziert ist. Außerdem kann sich die Streichleiste dadurch auch leichter räumlich verwinden und so unterschiedlichen karosserieseitigen Konturen leichter anpassen.

Zum Andrücken der Schutzfolie beginnt das Portal 65 an der vorderen, in Figur 2 strichpunktiert angedeuteten Ausgangsposition. Dort wird die Streichleiste vorne auf die Karosserie abgesenkt und das Portal fährt in Längsrichtung nach hinten mit gewichtsbelasteter, auf der Karosserie lose aufliegender Streichleiste über die fixiert gehaltene Karosserie hinweg und drückt so die lose applizierte Schutzfolie an. Ist das Ende der Motorhaube erreicht, so hebt das Portal die Streichleiste auf Dachniveau an und senkt sie zu Beginn des Daches vorsichtig wieder ab; das Andrücken wird an der Dach-Folie fortgesetzt. Beim Übergang vom Dach zum Heckdeckel wird die Streichleiste wieder vorsichtig umgesetzt und auch dort der Vorgang des Andrückens fortgesetzt. Gegen Ende des Heckdeckels wird die Streichleiste ganz angehoben und das Portal fährt bei angehobener Streichleiste in die vordere strichpunktiert angedeutete Ausgangslage zurück und wartet dort mit angehobener Streichleiste auf die nächste Karosserie.

Anstelle der eben beschriebenen Vorgehensweise ist auch die kinematische Umkehrung ohne weiteres denkber, bei der das Portal mit der vertikalbeweglichen Streichleiste ortsfest angeordnet ist und die Karosserie mittels einer z.B. im Boden integrierten Fördereinrichtung langsam durch das Portal hindurchbewegt wird. Diese Anordnung hätte zwar den Vorteil, daß die erwähnte Fördereinrichtung einfacher wäre, als die Längsführung für das eben beschriebene längsbewegliche Portal. Nachteilig wäre jedoch der größere Platzbedarf für eine derart ausgebildete Andrückstation, sofern in den Beklebestationen die Karosserien im Stillstand beklebt werden und sofern man nach der Applikation der Schutzfolie auf die Karosserie die Beklebestationen möglichst rasch für eine neue Karosserie freimachen möchte. Sofern jedoch die Schutzfolie in den Beklebestationen während eines langsamen Karosseriedurchlaufes angelegt werden sollte, so kann diese kontinuierlich auch in der Andrückstation weitergeführte Karosseriebewegung auch zum Andücken der Folie unterhalb des ortsfesten Portales ausgenützt werden. Der Platzbedarf der Andrückstation würde lediglich dem Platzbedarf des Portales zuzüglich eines gewissen Wartungs- und Sicherheitsabstandes entsprechen. Das gleiche würde auch für den Fall gelten, daß ein möglichst rasches Freiräumen der Beklebungsstationen nach dem Applizieren der Schutzfolie auf die Karosserie nicht gefordert wird. Diese Möglichkeit kann sich beispielsweise dann ergeben, wenn nur kleine Stückzahlen von Karosserien in einer installierten Applikationslinie pro Zeiteinheit mit Schutzfolie zu bekleben sind.

In einem solchen Fall ist es auch denkbar, das Andrücken der Schutzfolie durch den jeweiligen Spannrahmen-Roboter durchzuführen, der ein Folienstück auf die Karosserie angelegt hat. In einem solchen Fall könnte auf eine gesonderte Andrückstation ganz verzichtet werden. Um die angelegte Schutzfolie durch den jeweiligen Spannrahmen-Roboter andrücken zu können, müßte der Spannrahmen mit einer beweglichen Streichleiste versehen sein, die während der Handhabung des Folienstückes in eine oberhalb des Spannrahmens liegende Ruheposition zurückgezogen ist und die zum Andrücken der Folie in eine unterhalb des Spannrahmens liegende Arbeitsposition gebracht werden kann. Auch bei dieser Doppelfunktion der Spannrahmen-Roboter zum Folien-Anlegen und zum Folien-Andrücken sind grundsätzlich zwei unterschiedliche Arbeitsweisen beim Folien-Andrücken denkbar, die sich durch eine kinematische Umkehr voneinander unterscheiden. Im einen Fall verharrt die Karosserie auch während des Folien-Andrückens ortsfest und die am Spannrahmen integrierte Streichleiste wird vom Spannrahmen-Roboter über das an der betreffenden Karosserie 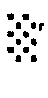 Teilfläche angelegte Folienstück hinweggestrichen. Die andere Möglichkeit besteht darin, daß beim Folien-Andrücken die Streichleiste und der Spannrahmen ortsfest verharren und die Karosserie langsam unter der Streichleiste hindurchbewegt wird. Es ist bei diesen beiden Arbeitsweisen zum einen denkbar, daß jedes einzelne Folien-Teilstück im unmittelbaren Anschluß an das jeweilie Folie-Anlegen durch den jeweiligen Spannrahmen-Roboter auch gleich angedrückt wird. Alternativ dazu ist es zum anderen möglich, daß nur derjenige Spannrahmen-Roboter, der das als letztes applizierte Folienteilstück anlegt, danach sämtliche Folienstücke andrückt. Die hier erörterten Alternativen eines Folien-Andrückens sind zeichnerisch nicht dargestellt.

Im Anschluß an die Andrückstation 14 ist eine Aufschneidestation 16 vorgesehen, in der überklebte Fugen 6 zu beweglichen Karosserieteilen hin automatisiert freigeschnitten werden können. In dieser Station ist ein weiterer frei programmierbaren Industrieroboter - Aufschneid-Roboter 80 - mit sechs Freiheitsgraden für den Roboterarm 81 und einer weiteren, siebten Bewegungsachse zum Verfahren des Aufschneidroboters entlang der Bodenführung 89 angeordnet. Nicht nur wegen der Meßaufgabe, sondern auch wegen der vorne und hinten an der Karosserie befindlichen, überklebten Fugen 6, an denen die Folie aufgeschnitten werden muß, ist der Aufschneidroboter mit der genannten Verfahrachse 89 ausgerüstet.

Am Arbeitsarm 81 ist ein in unterschiedliche Arbeitsstellungen schwenkbares Zweifachwerkzeug 82/83 angebracht. Beim Überführen der Karosserien von Station zu Station streut die tatsächliche Lage der Karosserien trotz einer mechanischen Fixierung der Förderschlitten an stationsseitigen Seiten- und Längsanschlägen in einem Toleranzfeld, welches für das Freischneiden der Fugen unzulässig groß ist. Diesen Lagetoleranzen der Karosserie sind noch gewisse Eigentoleranzen der Karosserie selber überlagert, die zwar für sich wesentlich kleiner als die Lagetoleranzen, aber beim Fugenfreischneiden zumindest in der Überlagerung nicht völlig vernachlässigbar sind. Deshalb muß vor dem Freischneiden der Fugen der Karosserie zunächst deren genaue Istlage in Relation zum Aufschneid-Roboter an einigen wenigen Karosseriepunkten vorne und hinten ermittelt werden. Dieses Vermessen der Istlage der Fugen kann durch ein stationäres dreidimensional arbeitendes Meßsystem erfolgen.

Beim dargestellten Ausführungsbeispiel erfolgt diese Istlage-Ermittlung der Fugen 6 ebenfalls durch den Aufschneid-Roboter 80 selber, der hierbei als Meßroboter arbeitet. Das in der einen Schwenkstellung des Zweifachwerkzeuges wirksam werdende Werkzeugteil ist demgemäß als ein Meßwerkzeug 82 ausgebildet, mit dem die genaue Ist-Lage der Karosserie 1 bzw. der Fugen 6 in Relation zum Aufschneid-Roboter erfaßt werden kann. Das in der anderen Schwenkstellung des Zweifachwerkzeuges wirksam werdende Werkzeugteil ist als ein Schneid- und Andrück-Werkzeug 83 ausgebildet, welches ein Messer 84 zum Durchtrennen der Schutzfolie im Fugenbereich und eine rotierende Bürste 87 zum Andrükken der Schnittränder aufweist. Die rotierende Bürste 87 ist von einem Elekromotor 88 aus über ein drehzahlreduzierendes Winkelgetriebe antreibbar.

Das Messer 84 ist quer zur Scheid- und Bewegungsrichtung mittels einer Blattfeder 85 elastisch aufgehängt, so daß es etwaigigen Lageabweichungen der Fuge von der roboterseitig vorgegebenen Führungsbahn zwanglos folgen kann. Damit andererseits das Messer nicht unzulässig stark seitlich ausweichen kann, ist der Bewegungsspielraum durch ein Paar von das Messer beiderseits übergreifenden Anschlagarmen 86 eingeengt, wobei der Bewegungsspielraum durch Justierschrauben 92 vorgegeben werden kann. Beim Einstechen des Messers in die Fuge muß jedoch eine eindeutige Lage des Messers sichergestellt und der Bewegungsspielraum aufgehoben werden. Deshalb können die um eine Schwenkachse 91 schwenkbaren Anschlagarme mittels eines kleinen, über einen Spreizkeil an den gegenüberliegenden Hebelarmen angreifenden Pneumatikzylinders 90 zusammengefahren und das Messer zwischen ihnen lagedefiniert eingespannt werden, was vorübergehend während des Einstechens des Messers in eine Fuge geschieht.

Zum Schutz der Lackierung im Fugenbereich vor Verkratzungen durch die hindurchstreichende Klinge des Messers 84 sind deren beide Flachseiten mit einer Kunststoffbeschichtung versehen, die einen unmittelbaren Kontakt des harten Klingenwerkstoffes mit der Lackierung verhindern, was jedoch zeichnerisch nicht dargestellt ist. Der beiderseits auf die Klinge aufgebrachte Kunstsoff sollte gute Gleiteigenschaften gegenüber ausgehärteten Fahrzeuglacken und gegenüber der zu applizierenden Folie besitzen. Was die Beschichtungsstärke und Verschleißbeständigkeit des Beschichtungskunststoffes anlangt, so sollte die Beschichtung mindestens die Lebensdauer der Messerklinge erreichen, auch wenn diese mehrmals nachgeschliffen wird. Aus Gründen des Anschärfens der Klinge ist die Kunststoffbeschichtung der Klinge gegenüber der Schneidkante zurückversetzt.

Auch im Zusammenhang mit dem Schneidwerkzeug 83 sei erwähnt, daß hier im Hinblick auf ein rationelles Arbeiten ein rascher Wechsel der Messer 84 möglich sein muß, weil diese aufgrund der großen aufzuschneidenden Folienlängen einem entsprechenden Verschleiß unterliegen. Zweckmäßig werden auch hier Maßnahmen zur Standzeiterhöhung eingesetzt, wie besserer Messerwerkstoff, Hartbeschichtung der Schneide oder höhere Verschleißreserve beispielsweise durch Einsatz von drehbaren Rundmessern. Der Vollständigkeit halber sei im Zusammenhang mit diesem Roboterwerkzeug noch einmal erwähnt, daß es im Schadensfall rasch ausgetauscht werden muß und alle Verbindungen mechanischer, elektrischer oder fluidischer Art für einen Schnellwechsel gestaltet sein müssen. Auch das Meßwerkzeug 82 alleine sollte rasch innerhalb des Doppelwerkzeuges 82/83 ausgetauscht werden können.

Es können mit der geschilderten Anlage ohne weiteres Karosserien unterschiedlicher Fahrzeugtypen im Produktions-Mix mit Schutzfolien beklebt werden, wenn dazu in den Stationen geringfügige Zusatzausrüstungen vorgesehen werden. Und zwar muß zumindest in der ersten Arbeitsstation eine selbsttätig arbeitende Typerkennung installiert sein, die einen mit den Karosserien mitgeführten Datenträger anfährt und den Karosserietyp daraus ermittelt. Beispielsweise kann dies durch ein an den Karosserien mitgeführtes Barcode-Etikett und durch einen Barcode-Leser im Eingangsbereich der Arbeitsstation erfolgen. Auch andere Informationsträger sind grundsätzlich hierfür geeignet. Diese Information kann mit dem Durchtakten der Karosserien von Arbeitsstation zu Arbeitsstation schrittweise durch die Arbeitslinie hindurchgetaktet werden. Auf eine geeignete Weise muß in die Robotersteuerung einer jeden Arbeitsstation der jeweils in der Station befindliche Karosserietyp eingespeist werden. Außerdem muß in den Robotersteuerungen eine Programmauswahl zur Behandlung der unterschiedlichen Karosserietypen bereitgehalten werden, die rasch und automatisch gewechselt werden können.

Zur Flexibilisierung der Fertigungslinie im Hinblick auf einen Produktions-Mix brauchen die Spannrahmen 37, 37' und 37" in der Breite nicht unbedingt veränderbar zu sein; sie können in dieser Hinsicht auf den breitesten Karosserietyp ausgelegt sein. Bei schmaleren Karosserien erstreckt sich dann die Schutzfolie etwas mehr in die Seitenwand hinein, was unschädlich ist. Will man dies vermeiden, so müßten bei Einsatz unterschiedlich breiter Folien für unterschiedlich breite Karosserien die Saugleisten im Randbereich mit zuschaltbaren Kammern ausgerüstet werden, so daß das Vakuum auf unterschiedlichen Breiten wirksam werden kann. Um auch unterschiedliche Längen von Oberflächenpartien mit dem gleichen Spannrahmen bedienen zu können, ist zweckmäßigerweise die hintere Saugleiste des Spannrahmens mittels Stellzylinder in unterschiedliche Positionen verfahrbar, so daß unterschiedliche Rahmenlängen eingestellt werden können.

Bei Stufenheck-Limousinen sind in der Regel drei Oberflächenpartien, nämlich Motorhaube 3, Dach 5 und Heckdeckel 4 zu schützen, die sich bei unterschiedlichen Karosserietypen in Breite und/oder Länge unterscheiden können. Bei Combi-Limousinen ist das Dach deutlich länger, so daß diese Verlängerung nur schlecht durch ein Ausdehnen des Spannrahmens erreicht werden kann. Nachdem jedoch bei Combi-Limousinen der Heckdeckel entfällt, bietet es sich beim Erfordernis einer gemischten Produktion auch von Combi-Limousinen an, das längere Dach von Combi-Limousinen mit zwei Folienabschnitten - beginnend von hinten nach vorne - überlappend zu bekleben und dazu die Spannrahmen für Dach und Heckdeckel für die üblichen Stufenheck-Limousinen zu verwenden.

## Patentansprüche

1. Verfahren zum Applizieren von selbsthaftender Schutzfolie (23) auf Oberflächenpartien (3, 4, 5) von Fahrzeug-Karosserien (1), wobei ein abgemessenes Folienstück (44) von Schutzfolie (23) von einer bereitgestellten Vorratsrolle (21) abgezogen, unter einer Eigenspannung ausgespannt, abgeschnitten, lagegerecht auf die zugehörige Oberflächenpartie (3, 4, 5) der Karosserie (1) abgesenkt und auf sie angedrückt wird,
**dadurch gekennzeichnet,** daß das Abziehen eines abgemessenes Folienstückes (44) von der Vorratsrolle (21) durch einen Spannrahmen-Roboter (35, 35', 35") erfolgt, daß im ausgespannten Zustand der Schutzfolie vor der Folienapplikation Perforationslinien (45, 45', 45") mit einer programmiert verfahrbaren, ein Perforationswerkzeug (52) tragenden Einrichtung lagegerecht in die Schutzfolie angebracht werden, und daß das Absenken und lagegerechte Andrücken des perforierten Folienzuschnittes (44) auf die zugehörige Oberflächenpartie (3, 4, 5) der Karosserie (1) erst anschließend falten- und blasenfrei durch den Spannrahmen-Roboter (35, 35', 35") erfolgt.

2. Verfahren nach Anspruch 1,
**gekennzeichnet durch** die Gemeinsamkeit folgender Merkmale
a) lagedefiniertes und faltenfreies Festhalten und Bereitstellen des vorauslaufenden, von der Vorratsrolle (21) ausgehenden Endes (26) der Schutzfolie (23) derart, daß das Folienende (26) auf der nichthaftenden Seite (24) zumindest bereichsweise zugänglich ist,
b) Übernehmen des bereitgestellten vorratsseitigen Endes (26) der Schutzfolie (23) auf ihrer nichtklebenden Seite (24) durch eine mechanisch in Abziehrichtung (a) geführte erste Saugleiste (38) und Lösen der Folie von der Bereitstellungs-Halterung,
c) Abziehen eines größenmäßig auf eine Oberflächenpartie (3, 4, 5) abgestimmten, rechteckigen Stückes (44) einer Schutzfolie von der Vorratsrolle (21), deren Rollenbreite (R) jeweils auf eine Seitenlänge der zu schützenden Oberflächenpartien (3, 4, 5) abgestimmt ist, und ausspannen des Folienabzugstückes (44) in noch am Vorrat anhaftenden Zustand,
d) Aufsetzen einer in einem bestimmten Abstand zur ersten Saugleiste (38) gehaltenen und mit ihr einen Spannrahmen (37) bildenden zweiten Saugleiste (39) auf die nichtklebende Seite (24) der ausgespannten Schutzfolie (23) und dadurch Einspannen des abgezogenen Folienabzugstückes (44) in dem Spannrahmen (37) mit anschließendem Übernehmen des neuen vorratsseitigen Folienendes (26) an der Bereitstellungs-Halterung und Abschneiden des abgezogenen Folienstückes (44) vom Vorrat,
e) Perforieren von Abreißlinien (45, 45', 45") im Bereich der späteren Lage von Zubauteilen mittels einer beheizten, mechanisch entlang definierter Konturlinien geführten Zackenscheibe (55) in das frei ausgespannt gehaltene Folienstück (44) von der nichtklebenden Folienseite (24) her,
f) Ausrichten und Absenken des im Spannrahmen (37) ausgespannten und perforierten Folienzuschnittes (44) auf die zugeordnete Oberflächenpartie (3, 4, 5) der lagedefiniert bereitgestellten Fahrzeugkarosserie (1) und Anlegen des Folienzuschnittes (44) daran,
g) anschließendes Andrücken der Schutzfolie (44) mittels einer gleitfähigen und elastischen Streichleiste (67),
h) Durchtrennen der Schutzfolie im Bereich überklebter Fugen (6) und Andrücken der Schnittränder, vorzugsweise mit einer rotierenden Bürste (87),
i) Abziehen von Schutzfolienteilen im Bereich von Zubauteilen entlang der perforierten Reißlinien (45, 45', 45") und montagegerechtes Aussparen der verbleibenden Schutzfolie und entsorgen dieser Folienteile.

3. Verfahren nach Anspruch 1 oder 2,
**dadurch gekennzeichnet,**
daß die Schutzfolie (23) auf frisch lackierte Fahrzeugkarosserien (1) appliziert wird, die anschließend in die Endmontage einlaufen.

4. Verfahren nach Anspruch 1 oder 2,
**dadurch gekennzeichnet,**
daß die abgezogene Schutzfolie (23) vor ihrer Weiterverarbeitung antistatisch behandelt, d.h. von einer etwaigen statischen Aufladung befreit wird.

5. Verfahren nach Anspruch 1 oder 2,
**dadurch gekennzeichnet,**
daß ungeachtet etwaiger Durchmesseränderungen der Vorratsrolle (21) oder Haftungsschwankungen der Schutzfolie (23) in der Vorratsrolle die Schutzfolie (23) von der Vorratsrolle (21) mit einer gleichbleibenden Spannung abgezogen wird.

6. Verfahren nach Anspruch 1 oder 2,
**dadurch gekennzeichnet,**
daß das lagedefinierte und faltenfreie Festhalten und Bereitstellen des vorauslaufenden, von der Vorratsrolle (21) ausgehenden Endes (26) der Schutzfolie (23) auf ihrer nichthaftenden Seite (24) mittels eines zu- und abschaltbaren, entlang einer Haltesaugleiste (27) wirksamen Unterdruckes erfolgt, wobei zumindest bereichsweise ein erfaßbarer Randstreifen an Schutzfolie über die Haltesaugleiste (27) überstehen gelassen wird.

7. Verfahren nach Anspruch 1 oder 2,
**dadurch gekennzeichnet,**
daß der Spannrahmen (37, 37', 37") zum Ausspannen und Handhaben des Folienzuschnittes (44) durch einen frei programmierbaren Industrieroboter (35, 35', 35") mit mindestens fünf Freiheitsgraden der Bewegung geführt wird.

8. Verfahren nach Anspruch 1 oder 2,
**dadurch gekennzeichnet,**
daß das Abziehen der Schutzfolie (23) von der ortsfest gehaltenen Vorratsrolle (21) durch den robotergeführten Spannrahmen (37, 37', 37"), nämlich durch paralleles Wegbewegen der ersten Saugleiste (38) von der Vorratsrolle (21) und der Bereitstellungs-Halterung erfolgt.

9. Verfahren nach Anspruch 1 oder 2,
**dadurch gekennzeichnet,**
daß das Abschneiden des abgezogenen Folienstückes (44) vom Vorrat mittels eines geführten (30), quer laufenden Messers erfolgt.

10. Verfahren nach Anspruch 1 oder 2,
**dadurch gekennzeichnet,**
daß das Perforieren der Abreißlinien (45, 45', 45") in das frei ausgespannt gehaltene Folienstück (44) durch einen frei programmierbaren Industrieroboter (50, 50') mit mindestens fünf Freiheitsgraden der Bewegung erfolgt.

11. Verfahren nach Anspruch 1 oder 2,
**dadurch gekennzeichnet,**
daß beim Anlegen eines im Spannrahmen (37, 37', 37") gehaltenen Folienzuschnittes (44) auf die zugehörige Oberflächenpartie (3, 4, 5) die Haltekraft, mit der der Spannrahmen (37, 37', 37") den Folienzuschnitt (44) festhält, reduziert wird derart, daß die festgehaltenen Ränder des Folienzuschnittes (44) unter der beim Anlegen wölbungsbedingt zunehmenden Spannung des Folienzuschnittes (44) aus der Randeinspannung herausgleiten.

12. Verfahren nach Anspruch 1 oder 2,
**dadurch gekennzeichnet,**
daß in Wiederholung der Verfahrensschritte für das Folienapplizieren in Bezug auch auf die anderen zu überziehenden Oberflächenpartien (3, 4, 5) zunächst alle zu beklebenden Oberflächenpartien (3, 4, 5) der Karosserie (1) mit Schutzfolie (44) lagedefiniert beklebt werden und daß das Andrücken der Schutzfolien (44) erst anschließend mittels einer sich über die gesamte Fahrzeugbreite erstreckenden elastischen Streichleiste (67) einheitlich für alle überklebten Oberflächenpartien (3, 4, 5) erfolgt.

13. Verfahren nach Anspruch 1 oder 2,
**dadurch gekennzeichnet,**
daß bei Karosserien von Stufenheck-Limousinen die Schutzfolie für die Motorhaube (3) und die für den Heckdeckel (4) gleichzeitig und zeitversetzt zur Folienapplikation auf das Dach (5) appliziert werden.

14. Verfahren nach Anspruch 1 oder 2,
**dadurch gekennzeichnet,**
daß Schutzfolie nicht nur auf im wesentlichen sich horizontal erstreckende Oberflächenpartien (3, 4, 5) der Karosserie (1), sondern auch auf die Seitenflächen von Türen appliziert wird.

15. Verfahren nach Anspruch 12,
**dadurch gekennzeichnet,**
daß die elastische Streichleiste (67) unter annähernd konstanter Andrückkraft in Längsrichtung relativ zur Karosserie (1) gleitend oder die Karosserie (1) relativ zur Streichleiste (67) hinwegbewegt wird.

16. Verfahren nach Anspruch 2,
**dadurch gekennzeichnet,**
daß das Durchtrennen der Schutzfolie im Bereich überklebter Fugen (6) und das Andrücken der Schnittränder durch einen frei programmierbaren Industrieroboter (80) mit mindestens fünf Freiheitsgraden der Bewegung erfolgt.

17. Verfahren nach Anspruch 16,
**dadurch gekennzeichnet,**
daß vor dem Durchtrennen der Schutzfolie im Bereich überklebter Fugen (6) und dem Andrücken der Schnittränder zunächst die Ist-Position der Fugen (6) der Karosserie (1) innerhalb des Arbeitsraumes des Industrieroboters (80) ausgemessen und die Relativlage der Fugen (6) zum Industrieroboter (80) in die Robotersteuerung eingespeist wird.

18. Verfahren nach Anspruch 1 oder 2,
**dadurch gekennzeichnet,**
daß im Bereich der Kotflügel und Türen überstehende Folienabschnitte an der Karosserie (1) belassen werden.

19. Verfahren nach Anspruch 1 oder 2,
**dadurch gekennzeichnet,**
daß die Schutzfolienteile im Bereich von Zubauteilen entlang der perforierten Reißlinien (45, 45', 45") manuell von den Karosserien (1) abgezogen werden.

20. Vorrichtung zum automatisierten, serienmäßigen Applizieren von selbsthaftender Schutzfolie (23) auf Oberflächenpartien (3, 4, 5) von Fahrzeug-Karosserien (1), mit einer Halterung für eine Vorratsrolle (21), in der das vorauslaufende Ende (26) der Schutzfolie (23) greifgerecht festhalt- und bereitstellbar ist, ferner mit beweglichen Greifleiste zum Erfassen des Folienrandes und zum Abziehen eines abgemessenen Folienstückes (44) von der Vorratsrolle (21), mit einer Vorrichtung (30) zum rechtwinkligen Abschneiden von abgezogener Schutzfolie (44), und mit einer Anordnung zum Absenken und Anlegen eines ausgespannt gehaltenen Folienstückes (44) auf eine zugehörige Oberflächenpartie (3, 4, 5) der Fahrzeug-Karosserie (1), insbesondere zum Ausüben des Verfahrens nach Anspruch 1,
**gekennzeichnet durch** die Gemeinsamkeit folgender Merkmale:
> die Halterung für die Vorratsrolle (21) ist als wenigstens ein Rollenständer (20, 20', 20") für die bzw. eine Vorratsrolle (21) ausgebildet, in dem das vorauslaufende Ende (26) der Schutzfolie (23) derart lagedefiniert und faltenfrei festhalt- und bereitstellbar ist, daß das Folienende (26) auf der nichthaftenden Seite (24) zumindest bereichsweise zugänglich ist,
> die beweglichen Greifleisten zum Erfassen des Folienrandes und zum Abziehen eines abgemessenen Folienstückes (44) von der Vorratsrolle (21) sind an einem ersten frei programmierbaren Industrieroboter, nämlich einem Spannrahmen-Roboter (35, 35', 35"), mit mindestens fünf Freiheitsgraden der Bewegung für jede Oberflächenpartie (3, 4, 5) unterschiedlicher Größe vorgesehen, von welchen Spannrahmen-Robotern (35, 35', 35") jeder an seinem Arbeitsarm (36, 36', 36") einen auf die Größe der zu beklebenden Oberflächenpartie (3, 4, 5) abgestimmten, rechteckigen Spannrahmen (37) mit an zwei gegenüberliegenden Längsseiten angeordneten, als Saugleisten (38, 39) ausgebildeten Greifleisten aufweist, wobei der abgemessene Folienzuschnitt (44) durch den Spannrahmen-Roboter (35, 35', 35") von der Vorratsrolle (21) abziehbar und zwischen den gegenüberliegenden Saugleisten (38, 39) des Spannrahmens (37) ausspannbar und schließlich in ausgespannt gehaltenem Zustand auf eine zugehörige Oberflächenpartie (3, 4, 5) der Fahrzeug-Karosserie (1) anlegbar ist,
> ferner mit einem weiteren frei programmierbaren Industrieroboter, nämlich einem Perforations-Roboter (50, 50'), mit mindestens fünf Freiheitsgraden der Bewegung, an dessen Arbeitsarm (51) eine Einrichtung zum Perforieren von Abreißlinien (45, 45', 45") in ein seitens des Spannrahmen-Roboters (35, 35', 35") ausgespannt gehaltenes Folienstück (44) angeordnet ist,
> ferner mit einem die Fahrzeugkarosserie (1) überspannenden Portal (65), in dem eine sich über die gesamte Fahrzeugbreite erstreckende, in der Form an die zu überklebenden Oberflächenpartien angepaßte, elastische, gleitfähige Streichleiste (67) in Vertikalrichtung beweglich geführt (66) ist, die mit einer bestimmten Kraft an die Fahrzeugkarosserie (1) andrückbar ist, welches Portal (65) wahlweise in Längsrichtung zur Fahrzeugkarosserie (1) verschiebbar ist oder durch das die Karosserien (1) langsam hindurchförderbar sind.

21. Vorrichtung nach Anspruch 20,
**gekennzeichnet durch**
einen weiteren frei programmierbaren Industrieroboter, nämlich einen Aufschneid-Roboter (80), mit mindestens fünf Freiheitsgraden der Bewegung, an dessen Arbeitsarm (81) ein Schneidund Andrück-Werkzeug (83) angebracht ist, welches ein Messer (84) zum Durchtrennen der Schutzfolie (44) im Bereich überklebter Fugen (6) und eine rotierende Bürste (87) zum Andrükken der Schnittränder aufweist.

22. Vorrichtung nach Anspruch 21,
**dadurch gekennzeichnet,**
daß das Schneid- und Andrück-Werkzeug (83) in unterschiedliche Arbeitsstellungen schwenkbar und mit einem weiteren Werkzeug, nämlich einem Meßwerkzeug (82) kombiniert ist, welches Zweifachwerkzeug in der einen Schwenkstellung, in der es mit dem Meßwerkzeug (82) wirksam ist, zur Ist-Lageerfassung der genauen Relativlage der aufzuschneidenden Fugen (6) der Karosserie (1) innerhalb des Arbeitsraumes des Aufschneid-Roboters (80) dient und in der anderen Schwenkstellung mit dem Schneid- und Andrück-Werkzeug (83) wirksam ist.

23. Vorrichtung nach Anspruch 20,
**dadurch gekennzeichnet,**
daß die Vorrichtung in Form einer mehrere Arbeitsstationen (12 bis 17) umfassende Fertigungslinie (10) ausgebildet ist, durch die die zu beklebenden, auf Förderschlitten befestigten Karosserien (1) taktweise hindurchförderbar und in den einzelnen Arbeitsstationen (12 bis 17) innerhalb eines bestimmten Toleranzfeldes festsetzbar sind, wobei die einzelnen Arbeitsstationen (12 bis 17) um die Länge einer Karosserie (1) zuzüglich eines einen Bewegungsspielraum zwischen benachbarten Fahrzeug-karosserien (1) schaffenden Zusatzabstandes beabstandet sind.

24. Vorrichtung nach Anspruch 20,
**dadurch gekennzeichnet,**
daß für jede zu beklebende Oberflächenpartie (3, 4, 5) jeweils ein Rollenständer (20, 20', 20") und ein Spannrahmen-Roboter (35, 35', 35") vorgesehen ist und daß in jeder einer solchen Beklebe-Arbeitsstation (12, 13) mit einem Spannrahmen-Roboter (35, 35', 35") auch ein Perforations-Roboter (50, 50') angeordnet ist.

25. Vorrichtung nach Anspruch 24,
**dadurch gekennzeichnet,**
daß bei Stufenheck-Limousinen der Rollenständer (20) und Spannrahmen-Roboter (35) für die Motorhaube (3) zum einen und der Rollenständer (20') und Spannrahmen-Roboter (35') für den Heckdeckel (4) zum anderen in der selben Arbeitsstation (12) angeordnet sind.

26. Vorrichtung nach Anspruch 24,
**dadurch gekennzeichnet,**
daß die Perforationsroboter (50, 50') oberhalb der Karosserie (1) derart in der Arbeitsstation (12, 13) angeordnet sind, daß deren Arbeitsraum sich etwa mittig oberhalb der Karosserie (1) erstreckt.

27. Vorrichtung nach Anspruch 20,
**dadurch gekennzeichnet,**
daß das die Fahrzeugkarosserie (1) überspannende Portal (65) mit der hubbeweglich geführten Streichleiste (67) zum Andrükken der aufgeklebten Schutzfolie (44) in einer gesonderten Andrück-Arbeitsstation (14) vorgesehen ist, die erst nach den roboterbestückten Beklebe-Arbeitsstationen (12, 13) angeordnet ist.

28. Vorrichtung nach Anspruch 27,
**dadurch gekennzeichnet,**
daß zwischen den roboterbestückten Beklebe-Arbeitsstationen (12, 13) und der Andrück-Arbeitsstation (14) wenigstens eine Leer-Station (15) für störungsbedingt manuell vorzunehmende Arbeiten vorgesehen ist.

29. Vorrichtung nach Anspruch 20,
**gekennzeichnet durch** die Gemeinsamkeit folgender Merkmale:
> im Rollenständer (20) ist eine Saugleiste (27) zum lagedefinierten und faltenfreien Festhalten und Bereitstellen des vorauslaufenden Endes (26) der Schutzfolie (23) angebracht, die mit ihrer gelochten saugwirksamen Unterseite (28) auf der nichthaftenden, oben liegenden Seite (24) der Schutzfolie (23) angreift,
> die der Vorrichtung (30) zum Abschneiden zugekehrt liegende Begrenzungskante der Saugleiste (27) ist zinnenförmig konturiert, wobei auch die Vorsprünge (29) unterseitig saugwirksam gelocht sind, so daß die Schutzfolie (23) bis unmittelbar zum Folienende (26) sicher festgehalten aber im Bereich zwischen den Vorsprüngen (29) oberseitig zugänglich ist,
> die in Abziehrichtung (a) vorauslaufende Saugleiste (38) des Spannrahmens (37) ist an der vom Rahmeninnern wegweisenden Längsseite ebenfalls derart zinnenförmig konturiert, daß die Vorsprünge (40) der Spannrahmen-Saugleiste (38) zwischen die Lücken der ständerseitigen Saugleiste (27) bis zur Berührung mit der Schutzfolie (23) eintauchbar sind,
> lediglich die bei der Folien-Übernahme mit den zugänglichen Bereichen des ständerseitig bereitgehaltenen Foliendes (26) in Berührung gelangenden Stirnseiten (41) der Vorsprünge der Spannrahmen-Saugleiste sind saugwirksam gelocht und mit Unterdruck beaufschlagbar.

30. Vorrichtung nach Anspruch 29,
**dadurch gekennzeichnet,**
daß die Vorsprünge (29) der ständerseitigen Saugleiste (27) schmaler (Breite b) sind als die Vorsprünge (40) der Spannrahmen-Saugleiste(38, Breite B).

31. Vorrichtung nach Anspruch 20,
**dadurch gekennzeichnet,**
daß im Rollenständer (20, 20', 20") eine Antistatik-Schiene zum Ableiten etwaiger statischer Aufladungen der Schutzfolie (23) angeordnet ist, die die Schutzfolie (23) im Bereich eines frei ausgespannten Folientrums berührt.

32. Vorrichtung nach Anspruch 20,
**dadurch gekennzeichnet,**
daß im Rollenständer (20, 20', 20") eine Aufnahme für wenigstens zwei Vorratsrollen vorgesehen ist, von denen eine in Benutzung ist und die andere in Bereitschaft gehalten ist und daß die Vorrichtung derart ausgebildwet ist, daß bei vollständigem Verbrauch der in Benutzung befindlichen Vorratsrolle die in Bereitschaftgehaltene Vorratsrolle selbsttätig gegen die leere Rolle austauschbar ist.

33. Vorrichtung nach Anspruch 20,
**dadurch gekennzeichnet,**
daß im Rollenständer (20, 20', 20") eine die Schutzfolie umlenkende Tänzerwalze (22) angeordnet ist, die in Bezug auf die Vorratsrolle (21) in annähernd radialer Richtung verschiebbar gelagert und mit steuerbarer Kraft an den Umfang der Vorratsrolle (21) andrückbar ist.

34. Vorrichtung nach Anspruch 33,
**dadurch gekennzeichnet,**
daß die Tänzerwalze (22) mit einer Abbremseinrichtung versehen ist.

35. Vorrichtung nach Anspruch 20,
**dadurch gekennzeichnet,**
daß der in eine Vorratsrolle (21) aufgewickelte Vorrat von Schutzfolie (23) etwa für den Bedarf einer Arbeitsschicht bemessen ist.

36. Vorrichtung nach Anspruch 20,
**dadurch gekennzeichnet,**
daß die Spannrahmen-Saugleiste (38) mit verschwenkbaren, an die unterdruckbeaufschlagbare Stirnseite (41) der Vorsprünge (40) unter Vorspannung anlegbare Greifmittel (43) zum zusätzlichen Festhalten der Schutzfolie (23, 44) versehen ist.

37. Vorrichtung nach Anspruch 20,
**dadurch gekennzeichnet,**
daß die Spannrahmen-Saugleiste (38, 39) im Spannrahmen (37, 37', 37") bezüglich zweier Richtungen parallel zur Spannrahmenebene justierbar gehaltert sind.

38. Vorrichtung nach Anspruch 20,
**dadurch gekennzeichnet,**
daß die beiden gegenüberliegenden Spannrahmen-Saugleisten (38, 39) im Spannrahmen (37, 37', 37") bezüglich ihres gegenseitigen Abstandes selbsttätig veränderbar sind.

39. Vorrichtung nach Anspruch 20,
**dadurch gekennzeichnet,**
daß der die Spannrahmen-Saugleiste (38, 39) beaufschlagende Unterdruck aufgrund eines aufsteuerbaren By-passes von einem den Rand des aufgenommenen Folienzuschnittes (44) sicher festhaltenden Halte-Wert auf einen den Folienrand unter der Anlegespannung nur noch gleitend festhaltenden Gleit-Wert absenkbar ist.

40. Vorrichtung nach Anspruch 20,
**gekennzeichnet durch** eine Ausgestaltung des Perforationswerkzeuges (52) zum Perforieren von Reißlinien (45, 45', 45") in die ausgespannte Schutzfolie (44) gemäß folgenden Merkmalen:
> es ist wenigstens eine kreisförmige, frei drehbar gelagerte, am Außenumfang gezahnte Zackenscheibe (55) aus Metall mit einer Stärke von 0,3 bis 1 mm, vorzugsweise etwa 0,6 mm vorgesehen,
> die Zackenscheibe (55) ragt nur mit ihrem gezahnten Außenumfang zwischen Gleitkufen (56) hervor, die beim Perforieren der Schutzfolie (44) auf ihr entlanggleiten und die Eindringtiefe (T) der Zackenscheibe (55) in die Schutzfolie (44) begrenzen,
> im überdeckten Bereich der Zackenscheibe (55) ist innerhalb des Perforationswerkzeuges (52) eine Heizvorrichtung (57) zur kontrollierten temperaturgenauen Beheizung der Zackenscheibe (55) angeordnet.

41. Vorrichtung nach Anspruch 40,
**dadurch gekennzeichnet,**
daß das Perforationswerkzeug (52) als Tandemwerkzeug mit zwei parallel nebeneinander angeordneten beheizten Zackenscheiben (55) ausgebildet ist, derart, daß zeitgleich zwei äquidistant verlaufende Perforationslinien (45, 45') in die Schutzfolie (44) legbar sind.

42. Vorrichtung nach Anspruch 40 oder 41,
**dadurch gekennzeichnet,**
daß das Perforationswerkzeug als Mehrfachwerkzeug mit wenigstens zwei parallel nebeneinander angeordneten beheizten Zakkenscheiben (55) ausgebildet ist, von denen eine zwischen zwei Endstellungen Verschiebbar gelagert und mit einem Verschiebeantrieb gekoppelt ist, derart, daß wahlweise in der einen Endstellung nur eine Zackenscheibe in der anderen Endstellung zwei Zackenscheiben wirksam ist bzw. sind, so daß wahlweise eine einzelne Perforationslinie (45") oder zeitgleich zwei äquidistant verlaufende Perforationslinien (45, 45') in die Schutzfolie (44) legbar ist bzw. sind.

43. Vorrichtung nach Anspruch 40,
**dadurch gekennzeichnet,**
daß das Perforationswerkzeug in einer Ausgleichsführung gehaltert ist, in der das in Arbeitsstellung befindliche Perforationswerkzeuges leichtgängig quer zur Folienfläche relativ zum Ende des Roboterarmes, d.h. zur Roboterhand beweglich ist und daß das Perforationswerkzeug aufgrund Schwerkraftwirkung oder durch Federkraft oder durch die Wirkung eines linearen Hubantriebes mit definierter Kraft an die ausgespannte Folie andrückbar ist.

44. Vorrichtung nach Anspruch 40,
**gekennzeichnet durch** eine Ausbildung des gezahnten Umfanges der Zackenscheibe (55) des Perforationswerkzeuges (52, 53) gemäß folgenden Merkmalen:
> am Umfang der Zackenscheibe (55) sind mehrere durch hinter die Gleitkufen zurückspringende Zahnlücken (59) begrenzte, in die Schutzfolie perforierend eintauchende Zähne (58) von etwa 3 bis 8 mm Umfangserstreckung angeordnet,
> am vorderen und hinteren Ende eines jeden Zahnes (58) der Zackenscheibe (55) ist jeweil ein spitz auslaufender Dorn (60) von wenigstens etwa 2 mm radialer Erstreckung angeformt,
> die Breite (Z) der Zahnlücken (59) am Umfang der Zackenscheibe (55) auf der Höhe der Gleitkufen (56) beträgt etwa 1 bis 3 mm.

45. Vorrichtung nach Anspruch 40,
**dadurch gekennzeichnet,**
daß die Zackenscheibe (55) aus einem korrosionsbeständigem Stahl besteht.

46. Vorrichtung nach Anspruch 40,
**dadurch gekennzeichnet,**
daß die Zackenscheibe auf eine konstante Temperatur im Bereich von 120 bis 180 °C beheizbar ist.

47. Vorrichtung nach Anspruch 44,
**dadurch gekennzeichnet,**
daß der zwischen den beiden Dornen (60) eines Zahnes (58) befindliche Zahnrücken (59) jeweils schneidenartig angeschärft (61) ist.

## Claims

1. Method for applying self-adhesive protective sheeting (23) to surface parts (3, 4, 5) of vehicle bodies (1), a metered sheeting piece (44) of protective sheeting (23) being drawn off from a stock roll (21) supplied, being stretched out under inherent stress, being cut off, being lowered in the correct position onto the associated surface part (3, 4, 5) of the body (1) and being pressed onto the said surface part, characterized in that a metered sheeting piece (44) is drawn off from the stock roll (21) by a tentering-frame robot (35, 35', 35"), in that, in the stretched-out state of the protective sheeting, before the application of the sheeting, perforation lines (45, 45', 45") are made in the correct position in the protective sheeting by means of an apparatus capable of being moved in a programmed manner and carrying a perforating tool (52), and in that the perforated sheeting blank (44) is lowered and pressed in the correct position onto the associated surface part (3, 4, 5) of the body (1) only subsequently by the tentering-frame robot (35, 35', 35") so as to be free of creases and bubbles.

2. Method according to Claim 1, characterized by the commonality of the following features
a) the specifically positioned and crease-free retention and provision of the leading end (26) of the protective sheeting (23), the said end coming from the stock roll (21), in such a way that the sheeting end (26) is accessible, at least in regions, on the non-adhesive side (24),
b) reception of the provided stock-side end (26) of the protective sheeting (23) on its non-adhesive side (24) by a first suction bar (38) guided mechanically in the drawing-off direction (a) and the release of the sheeting from the provision holding device,
c) the drawing-off of a rectangular piece (44) of protective sheeting, coordinated in terms of size with a surface part (3, 4, 5), from the stock roll (21), the roll width (R) of which is coordinated in each case with a side length of the surface parts (3, 4, 5) to be protected and the stretching-out of the drawn-off sheeting piece (44) in the state still adhering to the stock,
d) the placing of a second suction bar (39), held at a specific distance from the first suction bar (38) and forming with it a tentering frame (37), onto the non-adhesive side (24) of the stretched-out protective sheeting (23) and, as a result, the chucking of the drawn-off sheeting piece (44) in the tentering frame (37) with the subsequent reception of the new stock-side sheeting end (26) on the provision holding device and the cutting-off of the drawn-off sheeting piece (44) from the stock,
e) the perforation of tear-off lines (45, 45', 45'') in the region of the subsequent position of accessory parts by means of a heated serrated disc (55), guided mechanically along definite contour lines, in the sheeting piece (44) from the non-adhesive sheeting side (24), the said sheeting piece being held in a freely stretched-out manner,
f) the alignment and lowering of the perforated sheeting blank (44), stretched out in the tentering frame (37), onto the associated surface part (3, 4, 5) of the vehicle body (1) provided in a specific position and the laying of the sheeting blank (44) onto the said surface part,
g) the subsequent pressing-down of the protective sheeting (44) by means of a slidable and elastic brushing bar (67),
h) the severing of the protective sheeting in the region of glued-over gaps (6) and the pressing-down of the cut edges, preferably by means of a rotating brush (87),
i) the drawing-off of protective sheeting parts in the region of accessory parts along the perforated tearing lines (45, 45', 45"), the making of clearances in the remaining protective sheeting in a manner appropriate for assembly and the disposal of these sheeting parts.

3. Method according to Claim 1 or 2, characterized in that the protective sheeting (23) is applied to freshly painted vehicle bodies (1) which subsequently run to the final assembly stage.

4. Method according to Claim 1 or 2, characterized in that the drawn-off protective sheeting (23), before being processed further, is treated antistatically, that is to say is freed of any static charge.

5. Method according to Claim 1 or 2, characterized in that the protective sheeting (23) is drawn off from the stock roll (21) with uniform tension, irrespective of any changes in diameter of the stock roll (21) or fluctuations in the adhesion of the protective sheeting (23) in the stock roll.

6. Method according to Claim 1 or 2, characterized in that the specifically positioned and crease-free retention and provision of the leading end (26) of the protective sheeting (23) on its non-adhesive side (24), the said end coming from the stock roll (21), take place by means of a switch-on and switch-off vacuum taking effect along a holding suction bar (27), a graspable edge strip of protective sheeting being allowed to project, at least in regions, beyond the holding suction bar (27).

7. Method according to Claim 1 or 2, characterized in that, for stretching out and handling the sheeting blank (44), the tentering frame (37, 37', 37") is guided by means of a freely programmable industrial robot (35, 35', 35") having at least five degrees of freedom of movement.

8. Method according to Claim 1 or 2, characterized in that the drawing-off of the protective sheeting (23) from the fixedly held stock roll (21) is carried out by means of the robot-controlled tentering frame (37, 37', 37"), in particular by the parallel movement of the first suction bar (38) away from the stock roll (21) and the provision holding device.

9. Method according to Claim 1 or 2, characterized in that the cutting-off of the drawn-off sheeting piece (44) from the stock is carried out by means of a guided (30) knife running transversely.

10. Method according to Claim 1 or 2, characterized in that the perforation of the tear-off lines (45, 45', 45") in the sheeting piece (44) held in a freely stretched-out manner is carried by means of a freely programmable industrial robot (50, 50') having at least five degrees of freedom of movement.

11. Method according to Claim 1 or 2, characterized in that, when a sheeting blank (44) held in the tentering frame (37, 37', 37") is being laid onto the associated surface part (3, 4, 5), the holding force with which the tentering frame (37, 37', 37") retains the sheeting blank (44) is reduced in such a way that the retained edges of the sheeting blank (44) slide out of the edge chucking under the tension of the sheeting blank (44), the said tension increasing as a consequence of curvature during the laying-on operation.

12. Method according to Claim 1 or 2, characterized in that, in a repetition of the method steps for the application of sheeting also with regard to the other surface parts (3, 4, 5) to be covered, first all the surface parts (3, 4, 5) of the body (1) which are to be glued with sheeting are glued with protective sheeting (44) in specific position, and in that the pressing-down of the protective sheetings (44) takes place only thereafter by means of an elastic brushing bar (67) which extends over the entire vehicle width and which is one and the same for all the glued-over surface parts (3, 4, 5).

13. Method according to Claim 1 or 2, characterized in that, in the case of bodies of notchback saloons, the protective sheeting for the engine bonnet (3) and that for the rear lid (4) are applied simultaneously and in a manner offset in time relative to the application of sheeting to the roof (5).

14. Method according to Claim 1 or 2, characterized in that protective sheeting is applied not only to essentially horizontally extending surface parts (3, 4, 5) of the body (1), but also to the side faces of doors.

15. Method according to Claim 12, characterized in that the elastic brushing bar (67) is slidably moved under an approximately constant pressure force in the longitudinal direction relative to the body (1) or the body (1) is moved forwards relative to the brushing bar (67).

16. Method according to Claim 2, characterized in that the severing of the protective sheeting in the region of glued-over gaps (6) and the pressing-down of the cut edges are carried out by means of a freely programmable industrial robot (80) having at least five degrees of freedom of movement.

17. Method according to Claim 16, characterized in that, before the protective sheeting is severed in the region of glued-over gaps (6) and before the cut edges are pressed down, first the actual position of the gaps (6) of the body (1) are made within the working space of the industrial robot (80) and the relative position of the gaps (6) in relation to the industrial robot (80) are fed into the robot control.

18. Method according to Claim 1 or 2, characterized in that sheeting portions projecting in the region of the mudguards and doors are left on the body (1).

19. Method according to Claim 1 or 2, characterized in that the protective sheeting parts in the region of accessory parts are drawn off manually from the bodies (1) along the perforated tearing lines (45, 45', 45").

20. Apparatus for the automated standard application of self-adhesive protective sheeting (23) to surface parts (3, 4, 5) of vehicle bodies (1), with a mounting for a stock roll (21), in which mounting the leading end (26) of the protective sheeting (23) can be retained and provided ready for gripping, furthermore with a movable gripping bar for grasping the sheeting edge and for drawing off a metered sheeting piece (44) from the stock roll (21), with a device (30) for cutting off drawn-off protective sheeting (44) at right angles, and with an arrangement for lowering and laying a sheeting piece (44), held stretched-out, onto an associated surface part (3, 4, 5) of the vehicle body (1), in particular for carrying out the method according to Claim 1, characterized by the combination of the following features:
• the mounting for the stock roll (21) is designed as at least one roll stand (20, 20', 20") for the or one stock roll (21), in which roll stand the leading end (26) of the protective sheeting (23) can be retained and provided in a specific position, and so as to be free of creases, in such a way that the sheeting end (26) is accessible, at least in regions, on the non-adhesive side (24),
• the movable gripping bars for grasping the sheeting edge and for drawing off a metered sheeting piece (44) from the stock roll (21) are provided on a first freely programmable industrial robot, specifically a tentering-frame robot (35, 35', 35"), with at least five degrees of freedom of movement for each surface part (3, 4, 5) of different size, each of which tentering-frame robots (35, 35', 35") has, on its working arm (36, 36', 36"), a rectangular tentering frame (37) which is coordinated with the size of the surface part (3, 4, 5) to be glued and which has gripping bars arranged on two opposite longitudinal sides and designed as suction bars (38, 39), the metered sheeting blank (44) being capable of being drawn off from the stock roll (21) by the tentering-frame robot (35, 35', 35") and of being stretched out between the opposite suction bars (38, 39) of the tentering frame (37) and, finally, of being laid, in the state held stretched out, onto an associated surface part (3, 4, 5) of the vehicle body (1),
• furthermore, with a further freely programmable industrial robot, namely a perforating robot (50, 50') with at least five degrees of freedom of movement, on the working arm (51) of which is arranged a device for perforating tear-off lines (45, 45', 45") in a sheeting piece (44) held, stretched out, by the centering-frame robot (35, 35', 35"),
• furthermore, with a gantry (65) which spans the vehicle body (1) and in which is guided (66) so as to movable in the vertical direction an elastic slidable brushing bar (67) which extends over the entire vehicle width and the shape of which is adapted to the surface parts to be glued over and which can be pressed with a definite force onto the vehicle body (1), selectively the said gantry (65) being capable of being displaced in the longitudinal direction relative to the vehicle body (1) or the bodies (1) being capable of being conveyed slowly through the said gantry.

21. Apparatus according to Claim 20, characterized by a further freely programmable industrial robot, namely a cutting-open robot (80) with at least five degrees of freedom of movement, on the working arm (81) of which is mounted a cutting and pressing-down cool (83) which has a knife (84) for severing the protective sheeting (44) in the region of glued-over gaps (6) and a rotating brush (87) for pressing down the cut edges.

22. Apparatus according to Claim 21, characterized in that the cutting and pressing-down tool (83) can be pivoted into different working positions and is combined with a further tool, namely a measuring tool (82), the said double tool serving, in one pivoting position, in which it takes effect with the measuring tool (82), for recording the exact actual relative position of the gaps (6) of the body (1) which are to be cut open, within the working space of the cutting-open robot (80), and, in the other pivoting position, taking effect with the cutting and pressing-down cool (83).

23. Apparatus according to Claim 20, characterized in that the apparatus is designed in the form of a production line (10) which comprises a plurality of workstations (12 to 17) and through which the bodies (1), to be glued with sheeting and fastened to conveying carriages, can be conveyed intermittently and can be fixed in the individual workstations (12 to 17) within a specific tolerance range, the individual workstations (12 to 17) being spaced from one another by the amount of the length of a body (1) plus an additional distance affording latitude of movement between adjacent vehicle bodies (1).

24. Apparatus according to Claim 20, characterized in that a roll stand (20, 20', 20'') and a tentering-frame robot (35, 35', 35") are provided in each case for each surface part (3, 4, 5) to be glued with sheeting, and in that a perforating robot (50, 50') is also arranged in each such sheeting glue-on workstation (12, 13) having a tentering-frame robot (35, 35', 35'').

25. Apparatus according to Claim 24, characterized in that, in the case of notchback saloons, the roll stand (20) and tentering-frame robot (35) for the engine bonnet (3), on the one hand, and a roll stand (20') and tentering-frame robot (35') for the rear lid (4), on the other hand are arranged in the same workstation (12).

26. Apparatus according to Claim 24, characterized in that the perforating robots (50, 50') are arranged in the workstation (12, 13) above the body (1), in such a way that their working space extends approximately centrally above the body (1).

27. Apparatus according to Claim 20, characterized in that the gantry (65) spanning the vehicle body (1) and having the brushing bar (67), guided in a lifting movement, for pressing down the glued-on protective sheeting (44) is provided in a separate press-down workstation (14) which is arranged only downstream of the robot-equipped sheeting glue-on workstations (12, 13).

28. Apparatus according to Claim 27, characterized in that at least one empty station (15) for work to be carried out manually as a consequence of a fault is provided between the robot-equipped sheeting glue on workstations (12, 13) and the press-down workstation (14) .

29. Apparatus according to Claim 20, characterized by the commonality of the following features:
• a suction bar (27) for the specifically positioned and crease-free retention and provision of the leading end (26) of the protective sheeting (23) is mounted in the roll stand (20), the said suction bar engaging with its holed suction-active underside (28) on the non-adhesive upper side (24) of the protective sheeting (23),
• that boundary edge of the suction bar (27) which faces the cutting-off device (30) has a crenellated contour, the projections (29) also being holed on the underside so as to have a suction effect, so that the protective sheeting (23) is retained securely as far as the immediate sheeting end (26), but is accessible on the topside in the region between the projections (29),
• that suction bar (38) of the tentering frame (37) which leads in the drawing-off direction (a) likewise has a crenellated contour on the longitudinal side facing away from the frame interior, in such a way that the projections (40) of the tentering-frame suction bar (38) can penetrate between the spaces of the stand-side suction bar (27) until they come into contact with the protective sheeting (23),
• only those end faces (41) of the projections of the tentering-frame suction bar which come into contact, during the reception of the sheeting, with the accessible regions of the sheeting end (26) provided on the stand side are holed so as to have a suction effect and are capable of being subjected to a vacuum.

30. Apparatus according to Claim 29, characterized in that the projections (29) of the stand-side suction bar (27) are narrower (width b) than the projections (40) of the centering-frame suction bar (38, width B).

31. Apparatus according to Claim 20, characterized in that an anti-static rail for diverting any static charges of the protective sheeting (23) is arranged in the roll stand (20, 20', 20"), the said rail being in contact with the protective sheeting (23) in the region of a freely stretched-out sheeting strand.

32. Apparatus according to Claim 20, characterized in that a receptacle for at least two stock rolls, of which one is in use and the other is kept in provision, is provided in the roll stand (20, 20', 20"), and in that the apparatus is designed in such a way that, when the stock roll in use is consumed completely, the stock kept in provision can be exchanged automatically for the empty roll.

33. Apparatus according to Claim 20, characterized in that there is arranged in the roll stand (20, 20', 20") a jockey roller (22) which deflects the protective sheeting and which is mounted so as to be displaceable in an approximately radial direction relative to the stock roll (21) and can be pressed with controllable force onto the circumference of the stock roll (21).

34. Apparatus according to Claim 33, characterized in that the jockey roller (22) is provided with a braking device.

35. Apparatus according to Claim 20, characterized in that the stock of protective sheeting (23) wound into a stock roll (21) is dimensioned approximately for the demand of one workshift.

36. Apparatus according to Claim 20, characterized in that the tentering-frame suction bar (38) is provided with pivotable gripping means (43) for the additional retention of the protective sheeting (23, 44), the said gripping means being capable of being laid under prestress onto the vacuum-loadable end face (41) of the projections (40).

37. Apparatus according to Claim 20, characterized in that the tentering-frame suction bars (38, 39) are held in the tentering frame (37, 37', 37'') so as to be adjustable in two directions parallel to the tentering-frame plane.

38. Apparatus according to Claim 20, characterized in that the distance between the two opposite tentering-frame suction bars (38, 39) in the tentering frame (37, 37', 37'') can be varied automatically.

39. Apparatus according to Claim 20, characterized in that the vacuum loading the tentering-frame suction bars (38, 39) can be lowered by means of an openable bypass from a holding value, at which the edge of the received sheeting blank (44) is retained securely, to a sliding value at which the sheeting edge is retained only slidably under the laying-on tension.

40. Apparatus according to Claim 20, characterized by a design of the perforating tool (52) for perforating tearing lines (45, 45', 45") in the stretched-out protective sheeting (44) according to the following features:
• at least one circular, freely rotatably mounted metal serrated disc (55) toothed on the outer circumference and having a thickness of 0.3 to 1 mm, preferably about 0.6 mm, is provided,
• the serrated disc (55) projects only with its toothed outer circumference between sliding runners (56) which slide along on the said disc during the perforation of the protective sheeting (44) and which limit the depth of penetration (T) of the serrated disc (55) into the protective sheeting (44),
• a heating device (57) for the controlled heating of the serrated disc (55) to an exact temperature is arranged within the perforating tool (52) in the covered region of the serrated disc (55).

41. Apparatus according to Claim 40, characterized in that the perforating tool (52) is designed as a tandem tool with two heated serrated discs (55) arranged next to one another in parallel, in such a way that two equidistant perforation lines (45, 45') can be made simultaneously in the protective sheeting (44).

42. Apparatus according to Claim 40 or 41, characterized in that the perforating tool is designed as a multiple tool with at least two heated serrated discs (55) which are arranged next to one another in parallel and one of which is mounted so as to be displaceable between two end positions and is coupled to a displacement drive, in such a way that, selectively, only one serrated disc takes effect in one end position and two serrated discs take effect in the other end position, so that, selectively, an individual perforation line (45") or two equidistant perforation lines (45, 45') simultaneously can be made in the protective sheeting (44).

43. Apparatus according to Claim 40, characterized in that the perforating tool is held in a compensating guide, in which the perforating tool located in the working position is movable with ease of movement transversely to the sheeting surface in relation to the end of the robot arm, that is to say to the robot hand, and in that the perforating tool can be pressed with definite force onto the stretched-out sheeting by virtue of the effect of gravity or by means of spring force or as the result of the effect of a linear lifting drive.

44. Apparatus according to Claim 40, characterized by a design of the toothed circumference of the serrated disc (55) of the perforating tool (52, 53) according to the following features:
• a plurality of teeth (58), which are delimited by tooth spaces (59) set back behind the sliding runners and penetrate with a perforating effect into the protective sheeting and which have a circum-ferential extent of about 3 to 8 mm, are arranged on the circumference of the serrated disc (55),
• a pointed spike (60) having a radial extent of at least about 2 mm is formed in each case on the front and the rear end of each tooth (58) of the serrated disc (55),
• the width (2) of the tooth spaces (59) on the circumference of the serrated disc (55) at a point level with the sliding runners (56) is about 1 to 3 mm.

45. Apparatus according to Claim 40, characterized in that the serrated disc (55) consists of a corrosion-resistant steel.

46. Apparatus according to Claim 40, characterized in that the serrated disc can be heated to a constant temperature in the range of 120 to 180°C.

47. Apparatus according to Claim 44, characterized in that the tooth back (59) located between the two spikes (60) of a tooth (58) is in each case sharpened in a cutter-like manner (61).

## Revendications

1. Procédé pour appliquer une feuille protectrice auto-adhésive (33) sur des éléments de surface (3, 4, 5) de carrosseries de véhicules, un morceau (44), coupé à longueur, d'une feuille de protection (23) est retiré d'un rouleau de réserve disponible (21), est tendu avec une tension propre, est coupé et abaissé dans une position correcte sur l'élément de surface associé (3, 4, 5) de la carrosserie (1) et est serré contre cette dernière, caractérisé en ce que le prélèvement d'un morceau de feuille (44), coupé à longueur, du rouleau de réserve (21) est exécuté par un robot (35, 35',35") à cadre de serrage, que lorsque la feuille de protection est à l'état tendu, des lignes de perforation (45, 45',45") peuvent être aménagées dans une position correcte dans la feuille de protection, avant l'application de cette dernière, à l'aide d'un dispositif déplaçable d'une manière programmée et portant un outil de perforation (52), et que l'abaissement et le serrage, en position correcte, du morceau de feuille perforé découpé (44) sur l'élément de surface associé (3, 4, 5) de la carrosserie (1) s'effectue ensuite seulement, sans formation de plis et de soufflures, au moyen du robot (35, 35', 35") à cadre de serrage.

2. Procédé selon la revendication 1, caractérisé par la combinaison des caractéristiques suivantes :
a) fixation et préparation, selon une position définie et sans formation de plis, de l'extrémité avant (26) de la feuille de protection (23), qui sort du rouleau de réserve (21), de telle sorte que l'extrémité (26) de la feuille est accessible au moins par zones sur le côté non adhésif (24),
b) prise en charge de l'extrémité préparée (26), située côté réserve, de la feuille de protection (23) sur sa face non adhésive (24) par une première barrette d'aspiration guidée mécaniquement dans la direction de tirage (a) et détachement de la feuille à partir du support de mise à disposition,
c) tirage d'un morceau rectangulaire (44) d'une feuille de protection, dont les dimensions sont réglées sur l'élément de surface (3, 4, 5), à partir du rouleau de réserve (21), dont la largeur (R) est accordée respectivement sur la longueur des côtés des éléments de surface à protéger (3, 4, 5), et mise en tension du morceau de feuille tiré (44) dans l'état dans lequel il adhère encore à la réserve,
d) application d'une seconde barrette d'aspiration (39) qui est maintenue à une distance déterminée de la première barrette d'aspiration (38) et forme avec cette dernière un cadre de serrage (37), sur la face non adhésive (24) de la feuille de protection tendue (23) et, de ce fait, serrage du morceau de feuille tiré (44) dans le cadre de serrage (34) avec prise en charge ultérieure de la nouvelle extrémité de feuille (26) côté réserve au niveau du support de mise à disposition et sectionnement du morceau de feuille tiré (44) par rapport à la réserve,
e) perforation de lignes d'arrachement (45, 45', 45") au niveau de la position ultérieure de composants additionnels à l'aide d'un disque denté chauffé (55), qui est guidé mécaniquement le long de lignes de contour définies, dans le morceau de feuille (44) maintenu à l'état librement tendu, à partir de la face non adhésive (24) de la feuille,
f) alignement et abaissement du morceau découpé de feuille (44), qui est perforé et tendu sur le cadre de serrage (37), sur l'élément de surface associé (3, 4, 5) de la carrosserie de véhicule (1) et dans une position définie, et application du morceau de feuille découpé (44) sur la carrosserie,
g) serrage ultérieur de la feuille de protection (44) à l'aide d'une barrette de balayage glissante et élastique (67),
h) sectionnement de la feuille de protection dans la zone de joints collés (6) et serrage des bords de coupe, de préférence à l'aide d'une brosse rotative (87),
i) tirage d'éléments de feuille de protection dans la zone des composants additionnels le long des lignes d'arrachement perforées (45, 45', 45") et découpage, conforme au montage, du reste de la feuille de protection et élimination de ces éléments de feuille.

3. Procédé selon la revendication 1 ou 2, caractérisé en ce qu'on applique la feuille de protection (23) sur des carrosseries (1) fraîchement peintes de véhicules, qui sont envoyées ensuite au montage final.

4. Procédé selon la revendication 1 ou 2, caractérisé en ce que la feuille de protection tirée (23) est soumise à un traitement antistatique avant la poursuite de son traitement, c'est-à-dire est libérée d'une charge statique éventuelle.

5. Procédé selon la revendication 1 ou 2, caractérisé en ce que la feuille de protection (23) est tirée du rouleau de réserve (21) avec une tension constante, sans tenir compte d'éventuelles variations du diamètre du rouleau de réserve (21) ou de variations de l'adhérence de la feuille de protection (23) dans le rouleau de réserve.

6. Procédé selon la revendication 1 ou 2, caractérisé en ce que le maintien ferme et la mise à disposition, selon une position définie et sans pli, de l'extrémité avant (6) de la feuille de protection (23), qui sort du rouleau de réserve (21) s'effectue sur sa face non adhésive (4) à l'aide d'une dépression pouvant être appliquée et supprimée, qui agit le long d'une barrette d'aspiration de retenue (27), une bande marginale pouvant être saisie subsistant au moins par endroits sur la feuille de protection en étant en saillie par rapport à la barrette d'aspiration de retenue (27).

7. Procédé selon la revendication 1 ou 2, caractérisé en ce que le cadre de serrage (37, 37', 37") servant à serrer et manipuler le morceau de feuille découpé (44) est guidé par un robot industriel (35, 35', 35") librement programmable et possédant au moins cinq degrés de liberté de déplacement.

8. Procédé selon la revendication 1 ou 2, caractérisé en ce que le tirage de la feuille de protection (23) s'effectue à partir du rouleau de réserve (21) retenu de façon fixe, au moyen du cadre de serrage (37, 37', 37") guidé par le robot, à savoir par écartement parallèle de la première barrette d'aspiration (38) par rapport au rouleau de réserve (21) et du système de retenue pour la mise à disposition.

9. Procédé selon la revendication 1 ou 2, caractérisé en ce que le sectionnement du morceau de feuille tiré (44) à partir de la réserve est réalisé à l'aide d'un couteau guidé (30), qui circule transversalement.

10. Procédé selon la revendication 1 ou 2, caractérisé en ce que la perforation de la ligne d'arrachement (45, 45', 45") dans le morceau de feuille (44) maintenu à l'état librement tendu, s'effectue au moyen d'un robot industriel (50, 50') librement programmable, comportant au moins cinq degré de liberté de déplacement.

11. Procédé selon la revendication 1 ou 2, caractérisé en ce que lors de l'application d'un morceau de feuille découpé (44) retenu dans le cadre de serrage (37, 37', 37"), sur l'élément de surface associé (3, 4, 5) on réduit la force de retenue, avec laquelle le cadre de support (37, 37', 37") maintient fermement le morceau de feuille découpé (44) de telle sorte que les bords maintenus fermement du morceau de feuille découpé (44) se dégagent en glissant du système de serrage du bord, sous la tension du morceau de feuille découpé (44), qui augmente d'une manière conditionnée par le cintrage lors de l'application.

12. Procédé selon la revendication 1 ou 2, caractérisé en ce que, lors de la répétition des étapes opératoires pour l'application de la feuille en liaison également avec les autres éléments de surface (3, 4, 5) devant être recouverts, tout d'abord on colle dans une position définie la feuille de protection (44) sur tous les éléments de surface (3, 4, 5) de la carrosserie (1), et le serrage de la feuille de protection (44) est exécuté ensuite seulement, d'une manière uniforme pour tous les éléments de surface à coller (3, 4, 5), à l'aide d'une barrette élastique de balayage (67) qui s'étend sur toute la largeur du véhicule.

13. Procédé selon la revendication 1 ou 2, caractérisé en ce que, dans le cas de carrosseries de limousines à arrière brisé, la feuille de protection pour le capot moteur (3) et la feuille de protection pour le capot arrière (4) sont appliquées simultanément et d'une manière décalée dans le temps par rapport à l'application de la feuille sur le toit (5).

14. Procédé selon la revendication 1 ou 2, caractérisé en ce que la feuille de protection est appliquée non seulement sur des éléments de surface (3, 4, 5) de la carrosserie (1) qui s'étendent sensiblement horizontalement, mais également sur les faces latérales de portières.

15. Procédé selon la revendication 12, caractérisé en ce qu'on déplace la barrette élastique de balayage (67) en glissant dans la direction longitudinale par rapport à la carrosserie (1) moyennant l'application d'une force de serrage approximativement constante ou bien la carrosserie (1) est déplacée par rapport à la barrette de balayage (67).

16. Procédé selon la revendication 2, caractérisé en ce que le sectionnement de la feuille de protection dans la zone de joints collés (6) et le serrage des bords de coupe sont exécutés par un robot industriel (80) qui est librement programmable et comporte au moins cinq degrés de liberté de déplacement.

17. Procédé selon la revendication 16, caractérisé en ce qu'avant le sectionnement de la feuille de protection dans la zone de joints collés (6) et avant le serrage des bords de coupe, tout d'abord la position réelle des joints (6) de la carrosserie (1) dans l'espace de travail du robot industriel (80) est mesurée et la position relative des joints (6) par rapport au robot industriel (80) est introduite dans l'unité de commande du robot.

18. Procédé selon la revendication 1 ou 2, caractérisé en ce que des parties de la feuille, qui sont en saillie dans la zone des ailes et des portières, subsistent sur la carrosserie (1).

19. Procédé selon la revendication 1 ou 2, caractérisé en ce que les morceaux de feuille de protection sont retirés manuellement de la carrosserie (1), dans la zone de composants additionnels, le long des lignes d'arrachement incorporé (45, 45', 45").

20. Dispositif pour l'application automatisée en série d'une feuille de protection auto-adhésive (3, 4, 5) comportant un dispositif de retenue pour un rouleau de réserve (21), dans lequel l'extrémité avant (26) de la feuille de protection (23) peut être retenue fermement et mise à disposition d'une manière adaptée pour sa préhension, comportant en outre une barrette mobile de préhension servant à saisir le bord de la feuille et à tirer un morceau de feuille coupé à longueur (44) à partir du rouleau de réserve (41), un dispositif (30) pour découper à angle droit la feuille de protection tirée (44), et un dispositif pour abaisser et appliquer un morceau de feuille maintenu tendu (44) sur un élément de surface associé (3, 4, 5) de la carrosserie (1) du véhicule, notamment pour la mise en oeuvre du procédé selon la revendication 1, caractérisé par la combinaison des caractéristiques suivantes :
> le dispositif de retenue pour le rouleau de réserve (21) est agencé sous la forme d'au moins un porte-rouleaux (20, 20', 20") pour le ou un rouleau de réserve (21), dans lequel l'extrémité avant (26) de la feuille de . protection (23) peut être retenue fermement et mise à disposition dans une position définie et sans pli de sorte que l'extrémité (26) de la feuille est accessible au moins par endroits, sur la face non adhésive (24),
> les barrettes mobiles de préhension servant à saisir le bord de la feuille et à tirer un morceau de feuille coupé (44) du rouleau de réserve (21) sont prévues sur un premier robot industriel librement programmable, à savoir un robot (35, 35', 35") à cadre de serrage, possédant au moins cinq degrés de liberté de déplacement pour chacun des éléments de surface (3, 4, 5) ayant des surfaces différentes, chacun des robots (35, 35", 35") à cadre de serrage comportant sur son bras de travail (36, 36',36") un cadre de serrage rectangulaire (37) accordé sur les dimensions de l'élément de surface à coller (3, 4, 5) et comportant des barrettes de préhension disposées sur deux côtés longitudinaux opposés et agencées sous la forme de barrettes d'aspiration (38, 39), le morceau de feuille découpé (44) coupé à longueur pouvant être tiré du rouleau de réserve (21) par le robot (35, 35', 35") à cadre de serrage et pouvant être tendu entre les barrettes d'aspiration opposées (38, 39) du cadre de serrage (37) et pouvant être appliqué, en étant maintenu à l'état tendu, sur un élément de surface (3, 4, 5) de la carrosserie (1) du véhicule,
> comportant en outre un autre robot industriel librement programmable, à savoir un robot de perforation (50, 50'), comportant au moins cinq degrés de liberté de déplacement et sur le bras de travail (51) duquel est monté un dispositif servant à perforer des lignes de perforation (45, 45', 45") dans un morceau de feuille (44) maintenu à l'état tendu du côté du robot (35, 35', 35") à cadre de serrage,
> comportant en outre un portique (65) qui s'étend au-dessus de la carrosserie (1) du véhicule et dans lequel une barrette élastique coulissante de balayage (67), qui s'étend sur toute la largeur du véhicule et dont la forme est adaptée aux éléments de surface devant être collés, est guidée avec possibilité de déplacement dans la direction verticale, barrette qui peut être repoussée avec une force déterminée contre la carrosserie (1) du véhicule, le portique (65) pouvant se déplacer au choix dans la direction longitudinale par rapport à la carrosserie (1) du véhicule, ou les carrosserie pouvant être entraînées lentement à travers le portique.

21. Dispositif selon la revendication 1, caractérisé par un autre robot industriel, librement programmable, à savoir un robot de découpage (80), comportant au moins cinq degrés de liberté de déplacement, sur le bras de travail (81) duquel est monté un outil de découpage et de serrage (83), qui comporte un couteau (84) servant à sectionner la feuille de protection (44) dans la zone de joints collés (6) et une brosse rotative (87) servant à serrer les bords de coupe.

22. Dispositif selon la revendication 21 caractérisé en ce que l'outil de coupe et de serrage (83) peut pivoter dans des positions de travail différentes et est combiné à un autre outil, à savoir un outil de mesure (82), lequel outil double est utilisé, dans une position pivotée dans laquelle il agit avec l'outil de mesure (82), pour détecter la valeur réelle de la position relative précise des joints devant être sectionnés (6) de la carrosserie (1) à l'intérieur de l'espace de travail du robot de découpage (80) et est actif, dans l'autre position-pivotée, avec l'outil de découpage et de serrage (83).

23. Dispositif selon la revendication 20, caractérisé en ce que le dispositif est agencé sous la forme d'une chaîne de fabrication (10), qui comprend plusieurs postes de travail (12 à 17) et sur laquelle les carrosseries (1), sur lesquelles un collage doit être effectué et qui sont fixées sur des chariots d'entraînement, peuvent être entraînées pas-à-pas et peuvent être bloquées dans les différents postes de travail (12 à 17) à l'intérieur d'une zone déterminée de tolérance, les différents postes de travail (12 à 17) étant séparés d'une distance égale à la longueur des carrosseries (1) plus une distance supplémentaire créant un espace de déplacement entre des carrosseries voisines (1) de véhicules.

24. Dispositif selon la revendication 20, caractérisé en ce que pour chaque élément de surface (3, 4, 5), sur lequel un blocage doit être effectué, il est prévu respectivement un porte-rouleaux (20, 20', 20") et un robot (35, 35', 35") comportant un cadre de serrage et qu'un robot de perforation (50, 50') est disposé également dans chaque poste de travail de collage (12, 13) de ce type, comportant un robot (35, 35', 35") à cadre de serrage.

25. Dispositif selon la revendication 24 caractérisé en ce que dans le cas de limousines à arrière brisé, le porte-rouleau (20) et le robot (35) à cadre de serrage sont disposés pour le capot moteur (3) et le porte-rouleaux (20') d'une part et le robot (35') à cadre de serrage pour le capot arrière (4) d'autre part sont disposés dans le même poste de travail (12).

26. Dispositif selon la revendication 24, caractérisé en ce que les robots de perforation (50, 50') sont disposés au-dessus de la carrosserie (1) dans le poste de travail (12, 13) de telle sorte que leur espace de travail s'étend approximativement en position centrée au-dessus de la carrosserie (1).

27. Dispositif selon la revendication 20, caractérisé en ce que le portique (65), qui s'étend au-dessus de la carrosserie (1) du véhicule, comporte une barrette de balayage (67) guidée selon un déplacement de levage et servant à serrer la feuille de protection collée (44) dans un poste particulier de travail de serrage (14), qui est disposé directement en aval des postes de travail de collage (12, 13) équipé de robots.

28. Dispositif selon la revendication 27, caractérisé en ce qu'au moins un poste vide (15) pour des travaux devant être exécutés manuellement en cas de perturbation est prévu entre les postes de travail de collage (12, 13) équipés de robots et le poste de travail de serrage (14).

29. Dispositif selon la revendication 20, caractérisé par la combinaison des caractéristiques suivantes :
> dans le porte-rouleaux (20) est installée une barrette d'aspiration (27) servant à maintenir fermement et mettre à disposition, dans une position définie et sans plis, l'extrémité avant (26) de la feuille de protection (23), qui s'applique, par sa face inférieure perforée (28), active pour l'aspiration, sur la face supérieure non adhésive (24) de la feuille de protection (23),
> le bord limite de la barrette d'aspiration (27), qui est tourné vers le dispositif de découpage (30), possède un profil crénelé, les parties saillantes (29) étant également perforées en fournissant un effet d'aspiration efficace au niveau de leurs faces inférieure, de sorte que la feuille de protection (23) est maintenue fermement de façon sûre jusqu'à proximité immédiate de l'extrémité (26) de la feuille, mais en étant accessible, au niveau de sa surface supérieure, dans la zone comprise entre les parties saillantes (29),
> la barrette d'aspiration (38), qui est en avant dans la direction de tirage (a), du cadre de serrage (37) possède également un profil crénelé au niveau du coté longitudinal qui est situé à l'opposé de l'intérieur du cadre, de telle sorte que les parties saillantes (40) de la barrette d'aspiration (38) du cadre de serrage peuvent . être insérées entre les espaces vides de la barrette d'aspiration (27) située du côté du porte-rouleaux, jusqu'à venir en contact avec la feuille de protection (23),
> seules les faces frontales (41), qui viennent en contact avec les parties accessibles de l'extrémité (26) de la feuille maintenue à disposition du côté du porte-rouleaux, lors de la prise en charge des feuilles, des parties saillantes de la barrette d'aspiration du cadre de support sont perforées de manière à réaliser une aspiration efficace et peuvent être chargées par une dépression.

30. Dispositif selon la revendication 29, caractérisé en ce que les parties saillantes (29) de la barrette d'aspiration (27) située du côté du porte-rouleaux est plus étroite (largeur b) que les parties saillantes (40) de la barrette d'aspiration (38, largeur B) du cadre de serrage.

31. Dispositif selon la revendication 20, caractérisé en ce que dans le porte-rouleaux (20, 20', 20") est disposé un rail antistatique servant à évacuer d'éventuelles charges statiques de la feuille de protection (23) et qui vient en contact avec la feuille de protection (23) au niveau d'une partie de la feuille tendue librement.

32. Dispositif selon la revendication 20, caractérisé en ce que dans le porte-rouleaux (20, 20', 20") est prévu un logement pour au moins deux rouleaux de réserve, dont l'un est en cours d'utilisation et dont l'autre est maintenu dans un état de disponibilité et que le dispositif est agencé de telle sorte que, lorsque l'utilisation du rouleau de réserve en cours d'utilisation est terminée, le rouleau de réserve maintenu dans un état de disponibilité peut remplacer automatiquement le rouleau vide.

33. Dispositif selon la revendication 20, caractérisé en ce que dans le porte-rouleaux (20, 20', 20") est disposé un rouleau danseur (22), qui dévie la feuille de protection, est monté de manière à être déplaçable par rapport au rouleau de réserve (21) dans une direction approximativement radiale et peut être serré avec une force commandable contre la périphérie du rouleau de réserve (21).

34. Dispositif selon la revendication 33, caractérisé en ce que le rouleau danseur (22) comporte un dispositif de freinage.

35. Dispositif selon la revendication 20, caractérisé en ce que la réserve de feuille de protection (23), enroulée sur un rouleau de réserve (21), est dimensionnée approximativement pour les besoins d'une équipe de travail.

36. Dispositif selon la revendication 20, caractérisé en ce que la barrette d'aspiration (38) du cadre de serrage comporte des moyens de préhension pivotant (43) qui peuvent s'appliquer sous précontrainte contre la face frontale (41), pouvant être chargée par une dépression, des parties saillantes (40), pour maintenir fermement, d'une manière supplémentaire, la feuille de protection (23, 44).

37. Dispositif selon la revendication 20, caractérisé en ce que la barrette d'aspiration (32) du cadre de serrage est retenue dans le cadre de serrage (37, 37', 37") de manière à être réglable, dans deux directions, parallèlement au plan du cadre de serrage.

38. Dispositif selon la revendication 20, caractérisé en ce que la distance réciproque entre les deux barrettes d'aspiration opposées (38, 39) situées dans le cadre de serrage (37, 37', 37") peut être modifiée d'une manière automatique.

39. Dispositif selon la revendication 20, caractérisé en ce que la dépression, qui charge la barrette d'obturation (38, 39) du cadre de serrage, peut être abaissée, sur la base d'un by-pass commandable, depuis une valeur de maintien, qui maintient fermement de façon sûre le bord du morceau de feuille découpé reçu (44), à une valeur de glissement qui retient encore seulement avec glissement le bord de la feuille sous l'action de la tension d'application.

40. Dispositif selon la revendication 20, caractérisé par un agencement de l'outil de perforation (52) permettant la perforation de lignes d'arrachement (45, 45', 45") dans la feuille de protection tendue (44), conformément aux caractéristiques suivantes :
> il est prévu au moins un disque circulaire (55) qui est monté de manière à pouvoir tourner librement, est dentelé sur sa périphérie extérieure et est réalisé en un métal possédant une épaisseur comprise entre 0,3 et 1 mm et de préférence égale à environ 0,6 mm,
> le disque denté (55) pénètre, uniquement par sa périphérie extérieure dentée, entre des patins glissants (56), qui lors de la perforation de la feuille de protection (44), glissent sur cette feuille et limitent la profondeur de pénétration (41) du disque denté (55) dans la feuille de protection (44),
> dans la partie recouverte du disque denté (55) est disposé, à l'intérieur de l'outil de perforation (52), un dispositif de chauffage (57) servant à chauffer le disque denté (55) d'une manière contrôlée et à une température précise.

41. Dispositif selon la revendication 40, caractérisé en ce que l'outil de perforation (52) est agencé sous la forme d'un outil en tandem comportant deux disques dentés chauffés (55), disposés parallèlement côte-à-côte, de telle sorte que deux lignes de perforation équidistantes (45, 45') sont formées simultanément dans la feuille de protection (44).

42. Dispositif selon la revendication 40 ou 41, caractérisé en ce que l'outil de perforation est agencé sous la forme d'un outil multiple comportant au moins deux disques dentés chauffés (55) disposés parallèlement côte-à-côte, dont l'un est monté de manière à être déplaçable entre deux positions d'extrémité et est couplé à un dispositif d'entraînement en translation de telle sorte qu'au choix dans une position d'extrémité, seul un disque denté est actif et, dans l'autre position d'extrémité, les deux disques dentés sont actifs de sorte qu'au choix une seule ligne de perforation (45") ou simultanément deux lignes de perforation équidistantes (45, 45') peuvent être formées dans la feuille de protection (44).

43. Dispositif selon la revendication 40, caractérisé en ce que l'outil de perforation est maintenu dans un guide d'équilibrage, dans lequel l'outil de perforation situé dans la position de travail peut se déplacer aisément par rapport à l'extrémité du bras du robot, c'est-à-dire de la main du robot, transversalement par rapport à la surface de la feuille et que l'outil de perforation peut être serré avec une force définie contre la feuille tendue sur la base de l'action de la force de pesanteur ou de l'action d'un ressort ou de l'action d'un dispositif de levage linéaire.

44. Dispositif selon la revendication 40, caractérisé par un agencement de la périphérie dentée du disque dentée (55) de l'outil de perforation (52, 53) conformément aux caractéristiques suivantes :
> sur la périphérie du disque denté (55) sont disposées plusieurs dents (58), qui sont limitées par des entre-dents (59) en retrait en arrière des patins glissants, et qui pénètrent dans la feuille de protection en la perforant et s'étendent sur une étendue circonférentielle comprise entre environ 3 et 8 mm,
> sur l'extrémité avant et arrière de chaque dent (58) du disque denté (55) est formé respectivement un ardillon (60) de forme pointue, qui s'étend radialement sur au moins environ 2 mm,
> la largeur (Z) des entre-dents (59) sur la périphérie du disque denté (55) à la hauteur des patins glissants (56) est comprise approximativement entre 1 et 3 mm.

45. Dispositif selon la revendication 40, caractérisé en ce que le disque denté (55) est constitué par un acier résistant à la corrosion.

46. Dispositif selon la revendication 40, caractérisé en ce que le disque denté peut être chauffé à une température constante dans la gamme de 120 à 180°C.

47. Dispositif selon la revendication 44, caractérisé en ce que l'entre-dent (59) situé entre les deux ardillons (60) d'une dent (58) est respectivement biseautée avec une forme de tranchant.
